(19) Europäisches Patentamt
European Patent Office
Office européen des brevets

(11) EP 2 780 395 B1

(12) **EUROPÄISCHE PATENTSCHRIFT**

(45) Veröffentlichungstag und Bekanntmachung des Hinweises auf die Patenterteilung:
**07.01.2015 Patentblatt 2015/02**

(21) Anmeldenummer: **12784278.9**

(22) Anmeldetag: **14.11.2012**

(51) Int Cl.:
***C08G 77/452*** *(2006.01)* ***C08G 77/54*** *(2006.01)*
***C09D 183/14*** *(2006.01)*

(86) Internationale Anmeldenummer:
**PCT/EP2012/072639**

(87) Internationale Veröffentlichungsnummer:
**WO 2013/072378 (23.05.2013 Gazette 2013/21)**

# (54) VERWENDUNG VON MODIFIZIERTEN POLYSILOXANEN IN BESCHICHTUNGSMITTELZUSAMMENSETZUNGEN UND FORMMASSEN

USE OF MODIFIED POLYSILOXANES IN COATING SUBSTANCE COMPOUNDS AND MOULDING COMPOUNDS

UTILISATION DE POLYSILOXANES MODIFIÉS DANS DES COMPOSITIONS DE PRODUITS DE REVÊTEMENT ET MASSES DE FORMAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.11.2011 EP 11189026**

(43) Veröffentlichungstag der Anmeldung:
**24.09.2014 Patentblatt 2014/39**

(73) Patentinhaber: **BYK-Chemie GmbH**
**46483 Wesel (DE)**

(72) Erfinder:
- **HANS, Marc**
  **46485 Wesel (DE)**
- **JAUNKY, Wojciech**
  **46485 Wesel (DE)**
- **DELLA VALENTINA, Petra**
  **46537 Dinslaken (DE)**
- **HARTMANN, Jürgen**
  **46147 Oberhausen (DE)**
- **WINTERMEYER, Verena**
  **47802 Krefeld (DE)**

(74) Vertreter: **Leifert & Steffan**
**Patentanwälte**
**Postfach 10 40 09**
**40031 Düsseldorf (DE)**

(56) Entgegenhaltungen:
**EP-A2- 0 290 109 US-A- 4 659 777**
**US-A- 4 883 836**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 780 395 B1

## Beschreibung

### Gebiet der Erfindung

Die vorliegende Erfindung betrifft die Verwendung von Polysiloxan-Polyoxazolin-Copolymeren als Additive in Beschichtungsmittelzusammensetzungen wie Farben und Lacken sowie in Formmassen. Die vorliegende Erfindung betrifft zudem Beschichtungsmittelzusammensetzungen und Formmassen, die Polysiloxan-Polyoxazolin-Copolymere enthalten. Die vorliegende Erfindung betrifft auch Beschichtungen beziehungsweise Lack- und Farbschichten sowie Formteile, die mit den Beschichtungsmittelzusammensetzungen und Formmassen, die Polysiloxan-Polyoxazolin-Copolymere enthalten, hergestellt wurden.

### Stand der Technik

In der Lackindustrie werden seit langem unterschiedlich modifizierte Polysiloxane als Additive in Beschichtungsmittelzusammensetzungen wie Farben und Lacken sowie in Formmassen eingesetzt. In der Regel handelt es sich dabei um Polymere, die ein Polysiloxanrückgrat besitzen, welches beispielsweise mit Polyester- und/oder Polyether(seiten)ketten gepfropft ist. Eingesetzt werden beispielsweise auch lineare Blockcopolymere, welche neben Polysiloxanblöcken auch Polyether- und/oder Polyesterblöcke enthalten. Durch diese Modifikationen werden verschiedene vorteilhafte anwendungstechnische Eigenschaften generiert und/oder eine Kompatibilität des jeweiligen Additivs mit den entsprechenden Beschichtungsmittelzusammensetzungen oder Formmassen erzielt. Bei den polyether- und/oder polyestermodifizierten Polysiloxanen handelt es sich in der Regel um oberflächenaktive Additive, das heißt also Additive, die - oft durch eine kontrollierte Anreicherung an der Oberfläche der jeweiligen Beschichtung - zu bestimmten vorteilhaften Oberflächeneigenschaften führen können. Solche Eigenschaften sind beispielsweise ein guter Verlauf der Beschichtungsmittelzusammensetzungen. Zu nennende Eigenschaften der aus den Beschichtungsmittelzusammensetzungen hergestellten Beschichtungen beziehungsweise Lackierungen oder der entsprechenden Formteile sind beispielsweise eine hohe Kratzfestigkeit oder aber ein geringer Gleitwiderstand und gute Antihafteigenschaften bei Verschmutzungen (das heißt eine gute Schmutzabweisung) bei gleichzeitigem Erhalt einer guten Überlackierbarkeit. Insbesondere vorteilhaft ist also das Erreichen einer Balance von geringem Gleitwiderstand und/oder effektiver Schmutzabweisung einerseits und guter Überlackierbarkeit anderseits. Eine solche Balance ist zum Beispiel von großer Wichtigkeit, wenn bereits beschichtete Substrate oder Formteile bis auf Weiteres gelagert werden sollen, um dann später für eine direkte Weiterverarbeitung beziehungsweise weitere Lackierung direkt verfügbar zu sein. Wichtig ist diese Balance insbesondere auch, um beispielsweise eine wie oben beschriebene schmutzabweisende Lackierung, insbesondere Decklackierung, im Falle einer Beschädigung ohne Haftungsprobleme reparieren zu können, das heißt also beschädigte und gegebenenfalls geschliffene Bereiche ohne Haftungsprobleme erneut lackieren zu können. Solche Beschädigungen können lokal durch direkte mechanische Einwirkung auf eine lackierte Oberfläche auftreten. Die Beschädigungen können natürlich auch im Rahmen des kontinuierlichen Verschleißes bei alltäglichem Gebrauch beziehungsweise alltäglicher Beanspruchung auftreten, wobei dann meist eine vollständige Erneuerung beziehungsweise Überlackierung der originären Beschichtungen notwendig ist. Gerade in letzterem Fall ist die beschriebene Balance von hoher Wichtigkeit.

Problematisch und nachteilig ist es, dass die zur Verwendung in Beschichtungsmittelzusammensetzungen und Formmassen bekannten modifizierten Polysiloxanadditive meist eine nicht zufriedenstellende Stabilität und/oder ein Migrationsverhalten aufweisen. Insbesondere unter dem Einfluss von thermischer Energie beziehungsweise Hitze weisen die polyether- und/oder polyestermodifizierten Polysiloxane keine zufriedenstellende Stabilität auf und können degradieren. Dies gilt im besonderen Maße für die polyethermodifizierten Polysiloxane. Die dabei entstehenden Reaktionsprodukte, insbesondere die entstehenden Silikonöle, sind in der Regel inkompatibel beziehungsweise schlecht mischbar mit den weiteren Bestandteilen der Beschichtungsmittelzusammensetzung oder Formmasse beziehungsweise der polymeren Matrix der schon hergestellten Lackierung oder des schon hergestellten Formteils und migrieren dann unkontrolliert an die Oberfläche der Beschichtungen oder des Formteils. Als Ergebnis zeigen sich meist Oberflächendefekte wie beispielsweise Krater und Kocher (vergleiche beispielsweise Steven J. Hinder et al., "Migration and segregation Phenomena of a silicone additive in a multilayer coating", Progress in Organic Coatings, 54 (2005) 104-112). Ein anderes Problem ergibt sich zudem hinsichtlich der Überlackierbarkeit der hergestellten Lackierung. Durch die unkontrollierte Anreicherung an der Oberfläche ist eine angemessene Überlackierbarkeit beziehungsweise Zwischenschichthaftung nicht mehr gegeben. Dieser Effekt ist vor allem für thermisch härtende Beschichtungsmittelzusammensetzungen und Formmassen von Relevanz, insbesondere für thermisch härtende Beschichtungsmittelzusammensetzungen und Formmassen, die bei hohen Temperaturen gehärtet werden. Ebenfalls relevant ist dieser Effekt beispielsweise für Beschichtungen, die nach Ihrer Herstellung im Rahmen ihrer Anwendungen entsprechend hohen Temperaturen ausgesetzt sind. Zu nennen sind beispielsweise bestimmte Pulverlacke, Coil-Coating-Lacke, Can-Coating-Lacke oder Lacke für die elektrische Isolierung.

Auch wenn die polyestermodifizierten Polysiloxane, wie sie beispielsweise in EP 0175 092 B1, EP 0217 364

B1 und US 7504469 beschrieben werden, hinsichtlich der thermischen Stabilität gegenüber den polyethermodifizierten Copolymeren Vorteile bieten, ist die Thermostabilität nach wie vor nicht ausreichend und bedarf weiterer Verbesserung. Hinzu kommt, dass die beschriebenen modifizierten Siloxane, das heißt also die polyethermodifizierten Polysiloxane und insbesondere auch die polyestermodifizierten Polysiloxane, auch ohne den expliziten Einfluss hoher Temperaturen auf die Beschichtungsmittelzusammensetzungen und/oder auf die daraus hergestellten Lackierungen eine Neigung zur Migration aufweisen können. Dies bedeutet insbesondere, dass sich das Additiv über die Zeit kontinuierlich an der Oberfläche einer schon hergestellten Lackschicht anreichern kann oder sogar aus der Oberfläche der Schicht heraustreten kann. Dieser Effekt kann selbstverständlich bei Beschichtungen, die bestimmten Temperaturschwankungen und/oder temporär immer wieder erhöhten Temperaturen ausgesetzt sind, beispielsweise Automobillackierungen (wie den Lackierungen im Bereich der Motorhaube, die der Motorwärme ausgesetzt sind), verstärkt auftreten.

Die beschriebenen Effekte haben insbesondere auch im Rahmen des Coil-Coating-Prozesses, bei dem das beschichtete Band wieder aufgerollt und gelagert wird, eine hohe Relevanz. Durch den internen Druck in der Rolle, der auf die Beschichtung wirkt, verstärkt sich das Migrationsverhalten nochmals. Selbiges gilt auch für lackierte Substrate, die zwar nicht nach dem Coil-Coating-Prozess beschichtet wurden, jedoch beispielsweise in gestapelter Form und damit ebenfalls einem hohen Druck ausgesetzt, gelagert werden. Durch die Migration können gegebenenfalls Schäden in der Lackierung entstehen und auch Haftungsprobleme, beispielsweise hinsichtlich der Zwischenschichthaftung, auftreten. Zusätzlich kann das Heraustreten des Additivs aus der Oberfläche zu einer Ablagerung des Additivs auf der Rückseite des beschichteten und aufgerollten Bandes führen, was bei einer späteren Beschichtung der Rückseite dieses Bandes zu Haftungsproblemen und Störungen führen kann. In jedem Fall ist damit auch die Langlebigkeit der Additive und damit der von Ihnen erzeugten vorteilhaften Effekte nicht ausreichend und damit verbesserungswürdig. Genauso ist das als Heraustreten des Additivs beschriebene Migrationsverhalten verbesserungswürdig. Die kontinuierliche Migration spielt des Weiteren eine wichtige Rolle bei Beschichtungen für Substrate, die beispielsweise in der Lebensmittelindustrie als Behälter oder Verpackungen eingesetzt werden. So können sich die Migration und der Austritt der Polymere aus der Lackschicht im Rahmen der Innendosenbeschichtung für Konserven als sehr nachteilig erweisen.

Als weitere modifizierte Polysiloxan-Blockcopolymere sind beispielsweise Polysiloxan-Polyoxazolin-Copolymere bekannt. Sie enthalten neben Polysiloxanblöcken auch Polyoxazolinblöcke, das heißt also Blöcke, die durch Polymerisation von Oxazolinen (Dihydrooxazolen), insbesondere 2-Oxazolinen (4,5-Dihydrooxazolen), hergestellt werden. EP 0 756 859 A1, EP 0 640 643 A2 sowie oder US 4,659,777 beschreiben den Einsatz solcher Blockpolymere in Haarpflege- und Kosmetikprodukten oder auch in Textilien beziehungsweise in bestimmten Textilfasern.

Die US 4,659,777 A offenbart auch die Verwendung der dort beschriebenen Additive in nicht thermisch härtenden Zusammensetzungen. Insbesondere wird der Einsatz in thermoplastischen und somit nicht thermisch härtenden Zusammensetzungen wie Polyvinylchlorid (PVC) gelehrt. In Spalte 5, Zeilen 17 ff. der US 4,659,777 A wird darauf hingewiesen, dass die darin beschriebenen Blockcopolymere, wenn diese mit anderen polymeren Materialien vermischt werden, durch Migration an die Oberfläche des entsprechenden Materials gelangen. Dabei erfolgt eine Umorientierung der Blockcopolymere an der Oberfläche, welche zu einer Herabsetzung des Kontaktwinkels polarer Flüssigkeiten und somit zu relativ hydrophilen Oberflächen führt. Eine Migration und Umorientierung ist daher wesentlich für die in der US 4,659,777 A angesprochenen Wirkungen. Eine derartige Migration und Umorientierung von Polysiloxan-Polyoxazolin-Copolymeren ist jedoch in thermisch härtenden und somit vernetzten Systemen weitestgehend unterbunden, so dass die in der US 4,659,777 A als wesentlich beschriebenen Wirkungen nicht auf thermisch härtende Systeme übertragbar sind.

## Aufgabe der vorliegenden Erfindung

Aufgabe der vorliegenden Erfindung war es, thermisch härtende Beschichtungsmittelzusammensetzungen und Formmassen, insbesondere Beschichtungsmittelzusammensetzungen, und daraus hergestellte Beschichtungen und Formteile bereitzustellen, die verschiedene vorteilhafte anwendungstechnische Eigenschaften wie einen guten Verlauf, eine gute Kratzfestigkeit und einen sehr geringen Gleitwiderstand besitzen. Insbesondere sollten hervorragende Antihafteigenschaften bei Verschmutzungen einerseits und eine gute Überlackierbarkeit andererseits erhalten werden. Im Vordergrund stand also eine ausgewogene und optimale Balance der beiden letztgenannten Eigenschaften. Wichtig ist eine solche Balance insbesondere für Decklackierungen, die bei wie oben beschriebener Beschädigung lokal oder vollständig erneuert beziehungsweise überlackiert werden müssen. Die vorteilhaften anwendungstechnischen Eigenschaften sollten zudem langzeitig erhalten bleiben. Insbesondere sollte verhindert werden, dass die genannten vorteilhaften Eigenschaften durch eine Migration und/oder Degradation von Additiven, die diese Eigenschaften bewirken können, signifikant nachlassen oder durch die Migration der Additive und/oder deren Zersetzungsprodukte nachteilige Folgeeffekte, beispielsweise Oberflächendefekte, entstehen. Es war insbesondere Aufgabe der vorliegenden Erfindung, eine Verbesserung von thermisch härtenden Beschichtungsmittelzusammensetzungen und Formteilen zu bewirken, die gängige polyestermodifizierte Polysiloxane als Additive enthalten. Insbesondere für thermisch härtende Beschichtungsmittelzusammensetzungen und Formmassen, die unter Anwendung höherer Temperaturen gehärtet werden oder aber

beispielsweise daraus hergestellten Lackierungen, die bestimmten Temperaturschwankungen und/oder regelmäßig erhöhten Temperaturen ausgesetzt sind, sollte ein möglichst vorteilhafter Langzeiteffekt der genannten Eigenschaften erhalten werden.

## Erfindungsgemäße Lösung

Im Rahmen der vorliegenden Erfindung wurde festgestellt, dass die oben formulierten Aufgaben durch den Einsatz von Polysiloxan-Polyoxazolin-Copolymeren als Additive in thermisch härtenden Beschichtungsmittelzusammensetzungen und Formmassen gelöst werden konnten.

Gegenstand der vorliegenden Erfindung ist demnach die Verwendung von Polysiloxan-Polyoxazolin-Copolymeren als Additive in thermisch härtenden Beschichtungsmittelzusammensetzungen und Formmassen.

Gegenstand der vorliegenden Erfindung sind zudem thermisch härtende Beschichtungsmittelzusammensetzungen und Formmassen enthaltend Polysiloxan-Polyoxazol in-Copolymere.

Des Weiteren sind Beschichtungen, die mit der erfindungsgemäßen thermisch härtenden Beschichtungsmittelzusammensetzung enthaltend Polysiloxan-Polyoxazolin-Copolymere auf einem Substrat hergestellt wurden, sowie entsprechende Formteile, Gegenstand der vorliegenden Erfindung.

Durch die erfindungsgemäße Verwendung werden verschiedene vorteilhafte anwendungstechnische Eigenschaften von thermisch härtenden Beschichtungsmittelzusammensetzungen und Formmassen beziehungsweise daraus hergestellten Beschichtungen und Formteilen wie ein guter Verlauf, eine gute Kratzfestigkeit, ein sehr geringer Gleitwiderstand und ein vermindertes Heraustreten des Additivs aus der Beschichtung erreicht. Insbesondere wird eine gute Balance zwischen hervorragenden Antihafteigenschaften bei Verschmutzungen einerseits und einer guten Überlackierbarkeit andererseits erhalten. Die Effekte haben zudem eine hervorragende und im Vergleich zum Stand der Technik deutlich verbesserte Langlebigkeit. Der Einsatz in thermisch härtenden Beschichtungsmittelzusammensetzungen und Formmassen, die bei hohen Temperaturen härtend sind beziehungsweise gehärtet werden müssen, sowie in Anwendungsbereichen, in denen schwankende, temporär erhöhte Temperaturen auf eine Beschichtung oder ein Formteil einwirken können, beispielsweise bei einer lackierten Automobilkarosserie, ist damit ganz besonders vorteilhaft.

## Ausführliche Beschreibung der Erfindung

Bei den erfindungsgemäß einzusetzenden Polysiloxan-Polyoxazolin-Copolymeren handelt es sich um Blockcopolymere, die mindestens einen Polysiloxan- und mindestens einen Polyoxazolinblock umfassen. Es kann sich dabei beispielsweise um lineare Blockcopolymere oder auch um verzweigte Blockcopolymere, das heißt also Blockcopolymere, an die seitlich an einen Block ein anderer Block angeknüpft beziehungsweise gepfropft ist, handeln.

Polysiloxane beziehungsweise entsprechende Polysiloxanblöcke sind bekannt. Insbesondere handelt es sich im Rahmen der vorliegenden Erfindung um Polysiloxanblöcke, die Einheiten der folgenden Strukturformel (I) enthalten:

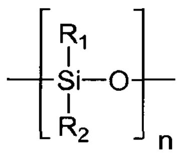

(I)

Dabei steht n für 1 bis 400, bevorzugt für 5 bis 200, besonders bevorzugt für 5 bis 100, und $R_1$ und $R_2$ unabhängig voneinander für gesättigte lineare Alkylreste mit 1 bis 6 Kohlenstoffatomen, gesättigte verzweigte Alkylreste mit 3 bis 6 Kohlenstoffatomen, gesättigte zyklische Alkylreste mit 4 bis 6 Kohlenstoffatomen und/oder lineare Alkenylreste mit 2 bis 6 Kohlenstoffatomen, verzweigte Alkenylreste mit 3 bis 6 Kohlenstoffatomen oder zyklische Alkenylreste mit 4 bis 6 Kohlenstoffatomen und/oder Arylreste, Alkylarylreste und/oder Arylalkylreste mit 6 bis 12 Kohlenstoffatomen, wobei die Reste gegebenenfalls halogensubstituiert sind, das heißt also gegebenenfalls einige oder alle H-Atome durch Halogenatome, insbesondere Fluor, ersetzt sind. Bevorzugt stehen $R_1$ und $R_2$ unabhängig voneinander für einen Methyl-, Ethyl-, Propyl-, Butyl-, fluorierten Alkylrest und/oder einen Phenylrest und/oder einen halogen- und/oder alkylsubstituierten Phenylrest. Besonders bevorzugte Reste $R_1$ und $R_2$ sind Methylreste.

Polyoxazoline sind ebenfalls bekannt und enthalten oder sind aufgebaut aus Oxazolinmonomeren. Von hauptsächlichem Interesse und damit auch im Rahmen der vorliegenden Erfindung bevorzugt, handelt es sich bei den eingesetzten Monomeren um 2-Oxazoline, insbesondere um in 2-Position substituierte 2-Oxazoline der allgemeinen Formel

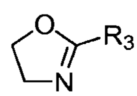

(A)

Dabei steht $R_3$ für Wasserstoff, einen gesättigten linearen Alkylrest mit 1 bis 12 Kohlenstoffatomen, einen gesättigten verzweigten Alkylrest mit 3 bis 12 Kohlenstoffatomen, einen linearen oder verzweigten Alkenylrest mit 3 bis 12 Kohlenstoffatomen oder einen Arylrest mit 6 bis 10 Kohlenstoffatomen wie zum Beispiel einen Phenyl-, Naphtyl- oder Benzylrest. Bevorzugt steht $R_3$ für einen gesättigten linearen Alkylrest mit 1 bis 6 Kohlenstoffatomen, besonders bevorzugt für einen Methyl- oder Ethylrest, ganz besonders bevorzugt für einen Ethylrest.

Aus den beschriebenen Monomeren lassen sich auf an sich bekannte Weise, beispielsweise mit p-Toluolsulfonsäurealkylestern wie p-Toluolsulfonsäuremethylester oder Allyltosylat als Initiator unter ringöffnender Polymerisation entsprechende Polymere herstellen (vergleiche beispielsweise Yoshiki Chujo et al., "Synthesis of polysiloxane-polyoxazoline graft copolymer by hydrosilylation reaction", Polymer Bulletin, 19 (1988) 435-440). Die entsprechenden Polymere und demzufolge die im Rahmen der vorliegenden Erfindung bevorzugten Polyoxazolinblöcke enthalten Einheiten der folgenden Strukturformel (B):

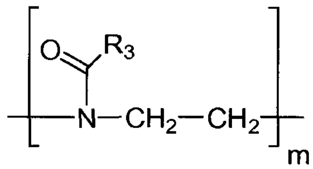

(B)

Dabei steht m für 1 bis 400, bevorzugt für 5 bis 200, besonders bevorzugt für 5 bis 100, und $R_3$, jeweils unabhängig von den gegebenenfalls anderen Resten $R_3$, für wie oben definierte organische Reste $R_3$.

Bevorzugte Polysiloxan-Polyoxazolin-Copolymere enthalten Polysiloxanblöcke, die aus der folgenden Strukturformel (II) bestehen:

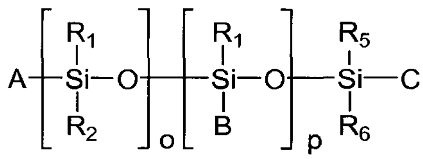

(II)

Dabei steht o für 0 bis 400, bevorzugt für 5 bis 200, besonders bevorzugt für 5 bis 100, p für 0 bis 400, bevorzugt für 0 bis 50, besonders bevorzugt für 0 bis 10, und $R_1$ und $R_2$ unabhängig voneinander für wie oben definierte organische Reste $R_1$ und $R_2$. $R_5$ und $R_6$ stehen unabhängig voneinander für $R_1$ oder $R_2$ oder für $R_4[SiR_1R_2O]_q$, worin q für 1 bis 400, bevorzugt für 5 bis 200 und $R_4$ für einen gesättigten linearen Alkylrest mit 1 bis 30 Kohlenstoffatomen, einen gesättigten verzweigten Alkylrest mit 3 bis 30 Kohlenstoffatomen, einen gesättigten zyklischen Alkylrest mit 4 bis 30 Kohlenstoffatomen und/oder einen Arylrest, einen Alkylarylrest und/oder einen Arylalkylrest mit 6 bis 30 Kohlenstoffatomen, wobei die Reste gegebenenfalls halogensubstituiert sind, steht. Vorzugsweise steht $R_4$ für einen Methylrest und/oder einen Butylrest.

A und C stehen unabhängig voneinander für B oder $R_4$.

B steht für einen linearen oder verzweigten Alkyl- oder Aralkylrest oder einen Linker mit einer linearen oder verzweigten Alkylen- oder Aralkylenstruktur, welche Stickstoff und Sauerstoffatome enthalten kann, mit der Maßgabe, dass pro Siloxanblock (II) mindestens ein solcher Linker vorhanden ist.

Als Linker wird im Rahmen der vorliegenden Erfindung eine Struktureinheit bezeichnet, die im Gegensatz zu einem Rest eine, in Bezug auf die formale Linkerstruktureinheit, freie Bindung enthält, welche dann die Verbindung zu anderen Struktureinheiten ermöglicht und damit im Molekül die Verknüpfung zu einer anderen Struktureinheit, insbesondere den unten beschriebenen Polyoxazolinblöcken, ausbildet.

Bevorzugt entspricht der mindestens eine Linker pro Siloxanblock der Formel (III):

$$(CH_2)_t\text{-}R_{10}\text{-}R_{11}\text{-}R_{12}\text{-}R_{13}\text{-} \qquad \text{(III)}$$

Dabei steht t für 2 bis 30, bevorzugt für 2 bis 3, besonders bevorzugt für 3, $R_{10}$ für $(CH_2)_u$, O, S, $NR_{14}$ oder $(C_6R_{15})_4$, wobei u für 0 oder 1 steht, $R_{14}$ für Wasserstoff oder einen gesättigten linearen Alkylrest mit 1 bis 6 Kohlenstoffatomen, einen gesättigten verzweigten Alkylrest mit 3 bis 6 Kohlenstoffatomen oder einen Arylrest, Alkylarylrest oder Arylalkylrest mit 6 bis 9 Kohlenstoffatomen und $R_{15}$ für Wasserstoff und/oder einen Alkylrest mit 1 bis 6 Kohlenstoffatomen steht.

$R_{11}$ steht für $(CH_2)_v$ oder $(CH_2CHR_{16}O)_w$, wobei v für 0 bis 30, bevorzugt für 0 bis 3, besonders bevorzugt für 0 und w für 0 bis 50, bevorzugt für 0 bis 30, besonders bevorzugt für 0 und $R_{16}$ für Wasserstoff oder einen gesättigten linearen Alkylrest mit 1 bis 6 Kohlenstoffatomen, einen gesättigten verzweigten Alkylrest mit 3 bis 6 Kohlenstoffatomen

oder einen gesättigten zyklischen Alkylrest mit 4 bis 6 Kohlenstoffatomen steht.

$R_{12}$ steht für $(CH_2)_x$, worin x für 0 bis 3 steht.

$R_{13}$ steht für $(CH_2)_y$, O, S, $NR_{14}$, worin y für 0 bis 2 und $R_{14}$ für wie oben definierte organische Reste $R_{14}$, vorzugsweise Wasserstoff, steht.

Vorzugsweise ist der Linker ein aminofunktioneller Linker $(CH_2)_t$-$R_{10}$-$R_{11}$-$R_{12}$-$NR_{14}$- und resultiert aus einem an das Siloxangerüst angeknüpften aminofunktionellen Rest $(CH_2)_t$-$R_{10}$-$R_{11}$-$R_{12}$-$NHR_{14}$. Vorzugsweise handelt es sich bei diesem aminofunktionellen Rest um einen aminofunktionellen Rest mit einer primären Aminogruppe, insbesondere um eine 2-Aminoethylgruppe, 3-Aminopropylgruppe, 3-Aminopropylethylethergruppe oder 6-Aminohexylgruppe, ganz besonders bevorzugt um eine 3-Aminopropylgruppe. Dies bedeutet also insbesondere, dass zur weiter unten beschriebenen Herstellung von den erfindungsgemäß einzusetzenden Polysiloxan-Polyoxazolin-Copolymeren Polysiloxane eingesetzt werden, welche mindestens eine endständige Aminogruppe enthalten und über diese Aminogruppe die Verknüpfung zu einem Polyoxazolin hergestellt wird, wobei dann eine Polysiloxan-Polyoxazolin-Copolymer entsteht, welches einen Polysiloxanblock umfassend einen aminofunktioneller Linker sowie einen Polyoxazolinblock enthält. Die Aminogruppe beziehungsweise der aminofunktionelle Rest $(CH_2)_t$-$R_{10}$-$R_{11}$-$R_{12}$-$NHR_{14}$ kann über an sich bekannte Methoden in das Polysiloxan eingeführt werden.

Zu nennen ist beispielsweise die Addition eines ungesättigten organischen Amins, insbesondere Allylamin, an ein Si-H funktionelles Polysiloxan, wobei diese bevorzugte Addition gleichbedeutend mit der Einführung des Linkers $(CH_2)_3$-NH- ist.

Der bevorzugte aminofunktionelle Linker kann auch versalzt oder quaternisiert sein. Die Modifizierung der Aminogruppen findet nach den dem Durchschnittsfachmann bekannten Verfahren statt. Die Quaternisierung des Stickstoffatoms einer Aminogruppe kann beispielsweise unter Verwendung von Alkyl- oder Aralkylhalogeniden, Halogencarbonsäureestern oder Epoxiden erfolgen.

Die aminofunktionellen Linker führen im Rahmen der vorliegenden Erfindung zu ganz besonders bevorzugten Eigenschaften und sind dementsprechend bevorzugt einzusetzen. Durch die beschriebene Versalzung oder Quaternisierung kann beispielsweise eine gute Anpassung der erfindungsgemäß einzusetzenden Copolymere an unterschiedliche Medien, das heißt also insbesondere sowohl wasserbasierte als auch lösemittelbasierte Beschichtungsmittelzusammensetzungen, erreicht werden. Eine solche Versalzung oder Quaternisierung ist insbesondere nicht mit den Stickstoffatomen im Polyoxazolingerüst möglich, da sich diese innerhalb einer Amidbindung in alpha-Stellung zu einer Carbonylgruppe befinden und somit durch die entsprechenden mesomeren Effekte keiner effektiven Versalzung oder Quaternisierung zugänglich sind. Weiterhin vorteilhaft ist die durch die Aminogruppe, insbesondere durch eine primäre Aminogruppe, ermöglichte effektive und präparativ einfache nucleophile Addition der Polysiloxane an die unten beschriebenen Oxazoline beziehungsweise Polyoxazoline, die eine schnelle, saubere und in hoher Ausbeute realisierbare Herstellung der erfindungsgemäß einzusetzenden Copolymere ermöglicht.

Die Polysiloxanblöcke können eine lineare oder verzweigte Struktur besitzen. Sie besitzen vorzugsweise ein zahlenmittleres Molekulargewicht im Bereich von 200 bis 30000, bevorzugter im Bereich von 500 bis 10000, und noch bevorzugter im Bereich von 500 bis 5000 g/mol (gemessen mittels Gelpermeationschromatographie (GPC) gegen Polysiloxanstandard, wobei jeweils das dem Polysiloxanblock zugrunde liegende Polysiloxan vor der Umsetzung zum Copolymer gemessen wird).

Bevorzugte Polysiloxan-Polyoxazolin-Copolymere enthalten Polyoxazolinblöcke, die aus der folgenden Strukturformel (C) bestehen:

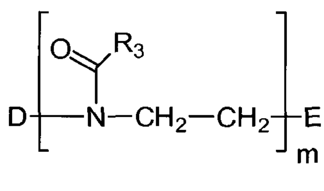

(C)

Dabei sind m und $R_3$ wie oben definiert und D steht für einen Linker $(CH_2)_z$, worin z für 0 oder 1 steht, oder einen gesättigten linearen Alkylrest mit 1 bis 30 Kohlenstoffatomen, einen gesättigten verzweigten Alkylrest mit 3 bis 30 Kohlenstoffatomen, einen gesättigten zyklischen Alkylrest mit 4 bis 30 Kohlenstoffatomen und/oder einen Arylrest, Alkylarylrest oder Arylalkylrest mit 6 bis 30 Kohlenstoffatomen. E steht entweder ebenfalls für den Linker $(CH_2)_z$, worin z für 0 oder 1 steht, oder für eine Endgruppe, an die die benachbarte $CH_2$-Einheit der Formel (C) über ein O- oder ein N-Atom gebunden ist, und dieses O oder N-Atom aus einer OH-Gruppe eines Wassermoleküls, eines organischen Alkohols beziehungsweise aus einer N-H-Einheit einer primären oder sekundären Aminogruppe eines Amins stammt. Der organische Rest des Alkohols beziehungsweise der mindestens eine organische Rest des Amins kann letztlich beliebig gewählt werden und ist insbesondere ein gesättigter linearer Alkylrest mit 1 bis 30 Kohlenstoffatomen, ein gesättigter verzweigter Alkylrest mit 3 bis 30 Kohlenstoffatomen, ein gesättigter zyklischer Alkylrest mit 4 bis 30 Kohlenstoffatomen und/oder ein Arylrest, Alkylarylrest oder Arylalkylrest mit 6 bis 30 Kohlenstoffatomen.

Des Weiteren gilt in der Formel (C) die Maßgabe, dass mindestens eine der Gruppen D und E ein wie oben beschriebener Linker ist.

Bevorzugt ist E ein Linker und D ein wie oben beschriebener Rest.

Für den Fall, dass beispielsweise E ein Linker $(CH_2)_z$, worin z für 0 steht, ist, ist E also nicht existent beziehungsweise die der Gruppe E benachbarte $CH_2$-Einheit gemäß Formel (C) ist direkt an eine andere Struktureinheit gebunden, beispielsweise einen wie oben beschriebenen Linker der Formel (III), insbesondere einen wie oben beschriebenen aminofunktioneller Linker.

Dies bedeutet also insbesondere, dass zur weiter unten beschriebenen Herstellung von den erfindungsgemäß einzusetzenden Polysiloxan-Polyoxazolin-Copolymeren zunächst nach bekannten Methoden unter ringöffnender Polymerisation ein Polyoxazolin hergestellt wird, welches dann mit einem Polysiloxan, beispielsweise mit einem Polysiloxan umfassend mindestens eine endständige Aminogruppe, umgesetzt wird. Über die Aminogruppe wird dann die Verknüpfung zum Polysiloxan hergestellt, wodurch letztlich ein Polysiloxan-Polyoxazolin-Copolymer entsteht, welches einen Polyoxazolinblock sowie einen Polysiloxanblock umfassend einen aminofunktionellen Linker enthält.

Die Polyoxazolinblöcke besitzen vorzugsweise ein zahlenmittleres Molekulargewicht im Bereich von 200 bis 30000, bevorzugter im Bereich von 500 bis 10000, und noch bevorzugter im Bereich von 500 bis 5000 g/mol (gemessen mittels Gelpermeationschromatographie (GPC) gegen Polystyrolstandard, wobei jeweils das dem Polyoxazolinblock zugrunde liegende Polyoxazolin vor der Umsetzung zum Copolymer gemessen wird).

Die Polysiloxan-Polyoxazolin-Copolymere können nach verschiedenen, dem Fachmann bekannten Verfahren hergestellt werden.

Bevorzugt sind die Polysiloxan-Polyoxazolin-Copolymere herstellbar durch Umsetzung eines aminofunktionellen Polysiloxans mit einem terminal reaktiven Polyoxazolin, welches durch ringöffnende Polymerisation von Oxazolinmonomeren hergestellt werden kann.

Eine solche Synthese ist wie beispielsweise in Synthesis of polyoxazoline - polysiloxane block copolymers (by Chujo, Yoshiki; Ihara, Eiji; Saegusa, Takeo; Fac. Eng., Kyoto Univ., Kyoto, Japan in Kobunshi Ronbunshu (1992), 49(11), 943-6) beschrieben.

Bei dieser Umsetzung werden bevorzugt die oben beschriebenen Polysiloxane umfassend mindestens einen aminofunktionellen Rest und damit mindestens eine endständige Aminogruppe eingesetzt. Es werden also bevorzugt Polysiloxane mit einem aminofunktionellen Rest $(CH_2)_t$-$R_{10}$-$R_{11}$-$R_{12}$-$NHR_{14}$ eingesetzt. Besonders bevorzugte aminofunktionelle Reste sind 2-Aminoethylgruppen, 3-Aminopropylgruppen, 3-Aminopropylethylethergruppne und/oder 6-Aminohexylgruppen, ganz besonders bevorzugt 3-Aminopropylgruppen. Bevorzugt sind Polysiloxane, die genau einen aminofunktionellen Rest aufweisen.

Für die ringöffnende Polymerisation zur Herstellung der bei der Umsetzung einzusetzenden terminal reaktiven Polyoxazoline werden bevorzugt p-Toluolsulfonsäurealkylester, insbesondere p-Toluolsulfonsäuremethylester, als Initiator eingesetzt. Die terminal reaktiven Polyoxazoline sind bekanntermaßen solche Polymere, in denen nach der ringöffnenden Polymerisation das letztangebundene Oxazolinmonomer noch keine Ringöffnung durchlaufen hat. Der noch geschlossene Ring des letztangebundenen Oxazolinmonomers trägt also eine positive Formalladung und ist damit reaktiv.

Bei der Umsetzung wird dann wie bei der vorher stattfindenden Oxazolinpolymerisation das aktivierte, in beta-Stellung zum Stickstoffatom des noch vorhandenen terminalen Oxazolinrings liegende Kohlenstoffatom nucleophil angegriffen. Dieser Angriff erfolgt dabei durch die mindestens eine Aminogruppe des aminofunktionellen Polysiloxans.

Polysiloxan-Polyoxazolin-Copolymere, die durch die bevorzugte Umsetzung herstellbar sind, bestehen also insbesondere aus den oben beschriebenen bevorzugten Polysiloxan- und Polyoxazolinblöcken.

Ganz besonders bevorzugt besteht es aus nicht mehr als drei Blöcken, wobei dabei bevorzugt ein Polysiloxan- und zwei Polyoxazolinblöcke vorhanden sind. In einer besonders bevorzugten Ausführungsform besteht das Polysiloxan-Polyoxazolin-Copolymer aus genau zwei Blöcken, einem Polysiloxan- und einem Polyoxazolinblock.

Die Polysiloxan-Polyoxazolin-Copolymere besitzen vorzugsweise ein zahlenmittleres Molekulargewicht im Bereich von 400 bis 200000, bevorzugter im Bereich von 1000 bis 50000, und noch bevorzugter im Bereich von 1000 bis 10000 g/mol (gemessen mittels Gelpermeationschromatographie (GPC) gegen Polystyrolstandard).

Bevorzugt werden die Polysiloxan-Polyoxazolin-Copolymere im Rahmen der erfindungsgemäßen Verwendung in einer Beschichtungsmittelzusammensetzung oder Formmasse, insbesondere in einer Beschichtungsmittelzusammensetzung, mit einem Anteil von 0,005 bis 5 Gew.-%, besonders bevorzugt von 0,01 bis 2 Gew.-%, insbesondere von 0,01 bis 1 Gew.-%, ganz besonders bevorzugt von 0,01 bis 0,95 Gew.-% jeweils bezogen auf die Gesamtzusammensetzung, eingesetzt. Dabei handelt es sich entweder um nur ein Polysiloxan-Polyoxazolin-Copolymer oder um eine Mischung mehrerer verschiedener Polysiloxan-Polyoxazolin-Copolymere. Vorzugsweise wird genau ein Copolymer eingesetzt.

Von ganz besonderem Vorteil ist die im Rahmen der vorliegenden Erfindung ermittelte Tatsache, dass bereits sehr geringe Mengen von Polysiloxan-Polyoxazolin-Copolymeren zu den oben beschriebenen vorteilhaften Eigenschaften führen und damit neben dem Vorteil eines nur geringen Verbrauchs andere Eigenschaften einer Beschichtungsmittelzusammensetzung oder Formmasse sowie von daraus hergestellten Lackierungen und Formteilen nicht negativ beeinflussen. Zu nennen sind hier Eigenschaften wie beispielsweise der Korrosionsschutz, die Glanzerhaltung oder die Witterungsbeständigkeit.

Im Rahmen der erfindungsgemäßen Verwendung werden Beschichtungsmittelzusammensetzungen eingesetzt. Dabei können unterschiedliche thermisch härtende Beschichtungsmittelzusammensetzungen zum Einsatz kommen. Die Beschichtungsmittelzusammensetzungen können dabei selbst- und/oder fremdvernetzend sein. Bevorzugt sind sie fremdvernetzend.

Im Rahmen der vorliegenden Erfindung bedeutet "thermisch härtend" die durch chemische Reaktion von reaktiven funktionellen Gruppen stattfindende Vernetzung einer Lackschicht (Bildung eines Beschichtungsfilms), wobei die energetische Aktivierung dieser chemischen Reaktion insbesondere durch thermische Energie möglich ist. Das thermische Härten ist also als chemisch-reaktives Härten zu verstehen, welches durch thermische Energie aktiviert werden kann. Dabei können bekanntermaßen unterschiedliche funktionelle Gruppen, die zueinander komplementär sind, miteinander reagieren und/oder die Filmbildung beruht auf der Reaktion von autoreaktiven Gruppen, das heißt also funktionellen Gruppen, die untereinander mit Gruppen ihrer Art reagieren. In jedem Fall liegt dem thermischen Härten also eine chemische Reaktion zwischen funktionellen Gruppen zugrunde. Beispiele geeigneter komplementärer reaktiver funktioneller Gruppen und autoreaktiver funktioneller Gruppen sind beispielsweise aus der deutschen Patentanmeldung DE 199 30 665 A1, Seite 7, Zeile 28, bis Seite 9, Zeilen 24, bekannt.

Bei dieser Vernetzung kann es sich um eine Selbstvernetzung und/oder eine Fremdvernetzung handeln. Sind beispielsweise die komplementären reaktiven funktionellen Gruppen bereits in einem wie weiter unten beschriebenen als Bindemittel eingesetzten organischen Polymer vorhanden, liegt eine Selbstvernetzung vor. Eine Fremdvernetzung liegt beispielsweise vor, wenn ein organisches Polymer als Bindemittel enthaltend bestimmte funktionelle Gruppen mit einem anderen organischen Polymer als Bindemittel, enthaltend komplementäre funktionelle Gruppen, reagiert. Ebenfalls eine Fremdvernetzung liegt vor, wenn das organische Polymer als Bindemittel mit einem wie weiter unten beschriebenen als Vernetzungsmittel eingesetzten organischen Verbindung reagiert, wobei dann das Vernetzungsmittel reaktive funktionelle Gruppen enthält, die zu den in dem eingesetzten organischen Polymer vorhandenen reaktiven funktionellen Gruppen komplementär sind.

Es ist auch möglich, dass ein organisches Polymer als Bindemittel sowohl selbstvernetzende als auch fremdvernetzende funktionelle Gruppen aufweist und dann mit Vernetzungsmitteln kombiniert wird.

Unterschiedliche thermisch härtende Beschichtungsmittelzusammensetzungen beziehungsweise deren Bestandteile werden beispielsweise in "Lackrohstoff-Tabellen, E. Karsten/O.Lückert, Vincentz 2000 ISBN 3878705611" und "Pigment- und Füllstoff-Tabellen, O. Lückert, Vincentz 2002 ISBN 9783878707448" beschrieben. Solche Beschichtungsmittelzusammensetzungen enthalten beispielsweise mindestens ein typisches organisches Polymer beziehungsweise polymeres Harz als Bindemittel sowie gegebenenfalls mindestens ein typisches organisches Lösemittel und/oder Wasser sowie gegebenenfalls weitere typische Lackadditive. Auf welche Weise und in welchen Mengen entsprechende Bestandteile von Beschichtungsmittelzusammensetzungen auszuwählen sind, ist dem Fachmann auf dem Gebiet bekannt. Eine entsprechende Auswahl kann der Fachmann in jedem Fall je nach den Anforderungen des jeweiligen Einzelfalls auf Basis seines Fachwissens treffen.

Bekanntermaßen handelt es sich bei organischen Polymeren, das heißt also beispielsweise bei den als Bindemittel einsetzbaren Polymeren oder auch bei den oben beschriebenen Polysiloxan-Polyoxazolin-Copolymeren, um Mischungen von verschieden großen Molekülen, wobei sich diese Moleküle durch eine Abfolge von gleichen oder verschiedenen organischen Monomereinheiten (als reagierte Form von organischen Monomeren) auszeichnen. Während einem bestimmten organischen Monomer eine diskrete Molmasse zuzuordnen ist, ist ein Polymer also immer eine Mischung von Molekülen, die sich in ihrer Molmasse unterscheiden. Ein Polymer kann daher nicht durch eine diskrete Molmasse beschrieben werden, sondern ihm werden bekanntermaßen immer mittlere Molmassen, nämlich eine zahlenmittlere ($M_n$) und eine gewichtsmittlere ($M_w$) Molmasse, zugeordnet.

Bei den einzusetzenden organischen Polymeren als Bindemittel handelt es sich beispielsweise um die an sich bekannten Polyadditions-, Polykondensations- und/oder Polymerisationsharze, die die oben genannten funktionellen Gruppen zur Vernetzung, beispielsweise OH-Gruppen, enthalten. In diesem Zusammenhang bekannte organische Polymere, die auch im Rahmen der vorliegenden Erfindung vorteilhaft eingesetzt werden können, sind beispielsweise die an sich bekannten Polyurethan-, Polyester-, Polyesterpolyol-, Acryl- (wie Polyacrylat-, Polymethacrylat- und gemischte Poly(meth)acrylat-), Polyesteracrylat-, Epoxid-, Phenol/Formaldehyd-, Poly(amid-imid)- und/oder Alkydharze. Ergänzend sei hierbei auf Römpp-Lexikon Lacke und Druckfarben, Georg Thieme Verlag, Stuttgart, New York, 1998, Seiten 73-74 verwiesen.

Bevorzugt werden neben den oben genannten organischen Polymeren als Bindemittel noch beispielsweise Aminoplastharze sowie monomere und/oder polymere blockierte und/oder freie Polyisocyanate, insbesondere blockierte Polyisocyanate, oder auch Hydroxyalkylamide als Vernetzungsmittel zur thermischen Härtung beziehungsweise Fremdvernetzung eingesetzt.

Insbesondere werden im Rahmen der erfindungsgemäßen Verwendung in Beschichtungsmittelzusammensetzungen Acryl-, Epoxy-, Alkyd-, Phenol/Formaldehyd- und Polyesterharze als Bindemittel eingesetzt, welche mit Melaminformaldehydharzen als Vernetzungsmittel kombiniert werden. Anwendung finden diese thermisch härtenden Beschichtungsmittelzusammensetzungen beispielsweise in der Automobil- und Bauindustrie, für Küchenutensilien, Möbel und ähnliches. Ebenfalls bevorzugt werden Poly(amid-imid)harze, welche beispielsweise zur elektrischen Isolierung von Kabelbeschichtungen verwendet werden, als Bindemittel eingesetzt. Außerdem bevorzugt sind Polyesterharze, welche mit Hydroxyalkylamiden (Primid-System) vernetzt werden und beispielsweise in Pulverbeschichtungen eingesetzt werden.

Der Gesamtanteil der organischen Polymere als Bindemittel und der gegebenenfalls vorhandenen Vernetzungsmittel an den thermisch härtenden Beschichtungsmittelzusammensetzungen ist vom jeweiligen Einzelfall abhängig und kann breit variieren. In bestimmten Ausführungsformen der vorliegenden Erfindung kann der Anteil beispielsweise im Bereich von 10 bis 90 Gew.-%, vorzugsweise von 15 bis 80 Gew.-%, besonders vorteilhaft zwischen 25 und 60 Gew.-%, jeweils bezogen auf die Gesamtmenge der Beschichtungsmittelzusammensetzung, liegen. Möglich sind aber durchaus auch niedrigere oder höhere, insbesondere höhere Anteile, beispielsweise wenn es sich bei der Beschichtungsmittelzusammensetzung um einen Pulverlack handelt.

Die thermisch härtende Beschichtungsmittelzusammensetzung enthält gegebenenfalls ein organisches Lösemittel. Als organische Lösemittel kommen die typischen, dem Fachmann bekannten organischen Lösemittel, beispielsweise aliphatische, cycloaliphatische, aromatische Lösemittel, typische Ether, Ester und/oder Ketone wie beispielsweise Butylglykol, Butyldiglykol, Butylacetat, Methylisobutylketon, Methylethylketon, Xylol, Toluol, Shellsol A, Solvesso-Produkte, zum Einsatz. Ebenfalls zum Einsatz kommen kann Wasser. Die thermisch härtende Beschichtungsmittelzusammensetzung kann also beispielsweise wasserbasierend oder lösemittelbasierend sein. Im Rahmen der vorliegenden Erfindung ist unter wasserbasierend zu verstehen, dass die Beschichtungsmittelzusammensetzung als Lösemittel hauptsächlich Wasser enthält. Insbesondere sind bei einer wasserbasierenden Beschichtungsmittelzusammensetzung nicht mehr als 20 Gew.-%, insbesondere nicht mehr als 10 Gew.-%, organischer Lösemittel, bezogen auf die Gesamtmenge an Lösemitteln, in der Beschichtungsmittelzusammensetzung enthalten. Als lösemittelbasierend gilt im Rahmen der vorliegenden Erfindung eine Beschichtungsmittelzusammensetzung, die nicht mehr als 10 Gew.-%, bevorzugt nicht mehr als 5 Gew.-%, insbesondere bevorzugt nicht mehr als 2 Gew.-% Wasser, bezogen auf die Gesamtmenge an Lösemitteln enthält. Natürlich kann die Beschichtungsmittelzusammensetzung auch im Vergleich zu den oben angegebenen Anteilen, die den wasserbasierenden oder lösemittelbasierenden Charakter begründen, ausgewogenere Anteile beziehungsweise Verhältnisse von organischen Lösemitteln und Wasser enthalten.

Bei der thermisch härtenden Beschichtungsmittelzusammensetzung kann es sich beispielsweise auch um einen Pulverlack handeln. Pulverlacke sind organische, meist duroplastische Beschichtungspulver mit einem Festkörperanteil von 100 %. Das Beschichten mit Pulverlacken erfordert bekanntermaßen keine Lösemittel. Möglich ist auch der Einsatz von Pulverlackslurries, das heißt also wässrigen Suspensionen eines Pulverlacks.

Der Anteil an Lösemittel an der Beschichtungsmittelzusammensetzung kann daher beispielsweise im Bereich von 0 bis 85 Gew.-%, bezogen auf die Gesamtmenge der Beschichtungsmittelzusammensetzung, liegen.

Die Tatsache, dass beispielsweise lösemittelbasierende, wasserbasierende und auch lösemittelfreie Beschichtungsmittelzusammensetzungen eingesetzt werden können, ist als besonders vorteilhaft anzusehen. Die Polysiloxan-Polyoxazolin-Copolymere weisen eine hervorragende Kompatibilität mit sowohl polaren als auch unpolaren Medien auf und führen in beiden Fällen zu den oben beschriebenen vorteilhaften anwendungstechnischen Eigenschaften. Die Breitenanwendbarkeit der ist demnach sehr groß. Dies gilt insbesondere für die Copolymere, die die oben beschriebenen aminofunktionellen Linker, welche versalzt oder quaternisiert werden können, enthalten.

Zudem kann die im Rahmen der vorliegenden Verwendung einzusetzende thermisch härtende Beschichtungsmittelzusammensetzung noch Pigmente oder Füllstoffe enthalten. Die Auswahl solcher Pigmente oder Füllstoffe kann vom Fachmann je nach den Anforderungen des Einzelfalls ausgewählt werden. Ergänzend sei beispielsweise auf Römpp-Lexikon Lacke und Druckfarben (Georg Thieme Verlag, Stuttgart, New York, 1998, Seiten 250 bis 252 sowie 451 bis 453) verwiesen.

Die im Rahmen der vorliegenden Verwendung einzusetzende thermisch härtende Beschichtungsmittelzusammensetzung kann auch noch unterschiedliche Lackadditive enthalten. Solche Lackadditive sind dem Fachmann bekannt und können von diesem nach den Anforderungen des Einzelfalls auf Basis seines Fachwissens ausgewählt werden. Zum Einsatz können beispielsweise Photoinitiatoren, Entschäumer, Netzmittel, filmbildende Hilfsmittel wie Cellulose-Derivate (beispielsweise Cellulosenitrat und Celluloseacetat), weitere Verlaufmittel, Dispergiermittel, und/oder rheologiesteuernde Additive kommen.

Besonders vorteilhaft ist die Verwendung der Polysiloxan-Polyoxazolin-Copolymere als Additive in deckenden Beschichtungsmittelzusammensetzungen, insbesondere in Decklacken. Dies sind bekanntermaßen solche Beschichtungsmittelzusammensetzungen, mit denen Beschichtungen aufgebaut werden, die die Grenzfläche zur Umwelt ausmachen. Diese Beschichtungen liegen damit auch in einer gegebenenfalls vorhandenen Mehrschichtlackierung ganz außen, das heißt auf der substratabgewandten Seite. Die oben beschriebenen Effekte, insbesondere die Schmutzabweisung, kommen in diesem Zusammenhang augenscheinlich besonders zur Geltung.

Besonders vorteilhaft ist zudem die Verwendung der Polysiloxan-Polyoxazolin-Copolymere als Additive in Beschichtungsmittelzusammensetzungen, welche für Substrate genutzt werden, die anschließend aufeinandergestapelt werden. Die oben beschriebene reduzierte Migration (Heraustreten des Additivs aus der Beschichtung) kommt in diesem Zusammenhang besonders vorteilhaft zur Geltung.

Weiterhin ist eine thermisch härtende Beschichtungsmittelzusammensetzung enthaltend Polyoxazolin-Polysiloxan-Copolymere Gegenstand der vorliegenden Erfindung. Die im Rahmen der erfindungsgemäßen Verwendung weiter oben beschriebenen Ausführungsformen und bevorzugten Ausführungsformen hinsichtlich der einzusetzenden Polyoxazolin-Polysiloxan-Copolymere und der Beschichtungsmittelzusammensetzungen gelten entsprechend auch für die erfindungsgemäße Beschichtungsmittelzusammensetzung enthaltend Polyoxazolin-Polysiloxan-Copolymere. Dies gilt explizit auch für die im Rahmen der ursprünglichen Ansprüche 2 bis 12 spezifizierten bevorzugten Ausführungsformen.

Die Herstellung der erfindungsgemäßen Beschichtungsmittelzusammensetzung erfolgt über die dem Fachmann geläufigen Verfahren und weist keine Besonderheiten auf. Es kommen die bekannten Methoden zum Einsatz, wie beispielsweise die schrittweise Zugabe unter Rühren und Vermischung der Bestandteile der Beschichtungsmittelzusammensetzung in üblichen und bekannten Mischaggregaten wie Rührkesseln oder Dissolvern.

Ebenfalls Gegenstand der vorliegenden Erfindung ist eine Beschichtung auf einem Substrat, die mit der erfindungsgemäßen Beschichtungsmittelzusammensetzung hergestellt wurde. Wiederum gelten die bereits genannten bevorzugten Ausführungsformen auch für die erfindungsgemäße Beschichtung.

Die Herstellung der Beschichtung erfolgt durch Applikation der erfindungsgemäßen Beschichtungsmittelzusammensetzung auf ein Substrat und anschließende Härtung der applizierten Beschichtungsmittelzusammensetzung.

Auch die Herstellung der Beschichtung erfolgt über die dem Fachmann geläufigen Applikationstechniken auf ein Substrat und anschließende Härtungsverfahren.

Die Applikation erfolgt beispielsweise, aber nicht ausschließlich, durch die bekannten Spritz-, Sprüh-, Rakel-, Streich-, Roll-, Giess-, Tränk- und/oder Tauchverfahren.

Nach der Applikation der thermisch härtenden Beschichtungsmittelzusammensetzung auf ein Substrat erfolgt die thermische Härtung nach gängigen Methoden. Beispielsweise kann die Härtung in Umlufttrocknern beziehungsweise - öfen oder über Infrarotstrahlung erfolgen. Die thermische Härtung kann beispielsweise im Bereich von etwa 10°C bis etwa 400°C, je nach Art der Beschichtungsmittelzusammensetzung und/oder des Substrats, erfolgen. Die Härtungsdauer beträgt, je nach Einzelfall, beispielsweise zwischen 1 Minute und mehreren Stunden oder sogar Tagen, beispielsweise 10 Tage, insbesondere aber zwischen 1 Minute und 2 Stunden, bevorzugt zwischen 1 Minute und 1 Stunde. Bevorzugt wird im Rahmen der vorliegenden Erfindung bei Temperaturen von über 100°C, insbesondere über 140°C, ganz besonders bevorzugt bei über 180°C, gehärtet. Die maximal anzuwendende Härtungstemperatur liegt dabei ebenfalls bei bevorzugt 400°C. Dies bedeutet also, dass die thermisch härtenden Beschichtungsmittelzusammensetzungen bevorzugt solche sind, die erst ab Temperaturen von über 100°C, insbesondere über 140°C, ganz besonders bevorzugt bei über 180°C vollständig härten können, da erst ab diesem Temperaturen eine effektive chemische Reaktion und damit Vernetzung der funktionellen komplementären und/oder autoreaktiven Gruppen möglich ist. Bekanntermaßen haben in der Regel die bei der Härtung existenten Temperaturen einen Einfluss darauf, ob eine vollständig gehärtete Beschichtung erhalten werden kann. Insbesondere ist in diesem Zusammenhang auf die zur chemischen Reaktion von wie oben beschriebenen komplementären und/oder autoreaktiven Gruppen notwendige thermische Energie zu verweisen. Gerade bei solchen Beschichtungsmittelzusammensetzungen kommen die vorteilhaften Effekte der vorliegenden Erfindung besonders zum Tragen, da die Polyoxazolin-Polysiloxan-Copolymere überraschenderweise thermisch wesentlich stabiler als die aus dem Stand der Technik für thermisch härtbare Beschichtungsmittelzusammensetzungen bekannten modifizierten Polysiloxanadditive sind und somit auch nicht aus der sich bildenden Beschichtung migrieren.

Unter vollständig gehärtet ist der Zustand einer Beschichtung zu verstehen, bei der die Gebrauchshärte in der gesamten Schicht erreicht ist. Die Schicht ist also sowohl lateral als auch senkrecht in einem hinsichtlich chemisch-reaktiver Vernetzung und Härte einheitlichen Zustand, der auch durch ein weiteres Aussetzen gegenüber Härtungsbedingungen, insbesondere also durch weitere Aussetzung von Temperaturen von über 100°C, bevorzugt über 140°C, ganz besonders bevorzugt über 180°C, nicht mehr verändert. Die Gebrauchsfähigkeit der Beschichtung wird also insbesondere nicht mehr verbessert, wenn sie noch weiter den beschriebenen erhöhten Temperaturen ausgesetzt wird.

Der Härtung kann gegebenenfalls, je nach Einzelfall, ein Ablüften vorausgehen, beispielsweise bei 10 bis 80°C, für eine Zeitdauer von 1 bis 60 min. Bei diesem Ablüften verdampfen bereits Teile des vorhandenen Lösemittels, wobei insbesondere noch keine vollständige Härtung resultiert.

Die Trockenschichtdicken betragen vorzugsweise 3 $\mu$m bis 5 mm, insbesondere 10 $\mu$m bis 2 mm, besonders bevorzugt 10 $\mu$m bis 200 $\mu$m. Auch hier kommt es jeweils auf die im Einzelfall vorliegenden Bedingungen sowie den individuellen Anwendungsbereich an.

Als Substrate können im Rahmen der vorliegenden Erfindung jegliche Substrate für Beschichtungsmittelzusammensetzungen zu Einsatz kommen. Insbesondere werden die erfindungsgemäßen Beschichtungen auf Metall, Glas, Kunststoffe, Holz, Leder, Kunstleder, Keramiken, Papier, Textilien in verschiedenen Ausführungen und Formen aufgebracht. Besonders bevorzugt sind Substrate, die eine hohe Hitzebeständigkeit aufweisen und insbesondere bei Temperaturen von über 140°C nicht ihre Form verändern oder sogar zersetzt werden. Insbesondere zu nennen sind also Substrate aus Metall.

Die erfindungsgemäße Beschichtung kann eine Einschichtbeschichtung oder eine Mehrschichtbeschichtung sein. Im Falle einer Mehrschichtbeschichtung können die Beschichtungsmittelzusammensetzung, mit der die einzelnen Schichten der erfindungsgemäßen Beschichtung hergestellt wird, gleich oder verschieden sein. Erfindungswesentlich ist jedoch, dass zumindest eine der eingesetzten Beschichtungsmittelzusammensetzungen eine erfindungsgemäße Beschichtungsmittelzusammensetzung ist, das heißt also Polyoxazolin-Polysiloxan-Copolymere als Additive, enthält. Bevorzugt ist diese zumindest eine Beschichtungsmittelzusammensetzung diejenige, die zur Herstellung der äußeren Schicht, das heißt der Decklackschicht, verwendet wird.

Für die thermisch härtenden Formmassen und die daraus hergestellten Formteile gilt hinsichtlich der Bestandteile, Herstellung und Anwendungsmöglichkeiten sinngemäß das gleiche, was oben hinsichtlich der Beschichtungsmittelzusammensetzungen und Beschichtungen angeführt wurde. Unter Formmassen werden Massen verstanden, die zu Formkörpern beziehungsweise -teilen verarbeitet werden, wobei die in den Massen enthaltenen Reaktionsharze, das heißt also insbesondere Bindemittel und gegebenenfalls Vernetzungsmittel, in der Regel bei erhöhter Temperatur, nach und/oder während der Formgebung zur Reaktion gebracht werden und damit thermisch gehärtet werden.

Formmassen im Sinne der Erfindung sind beispielsweise solche auf Basis von ungesättigten Polyesterharzen und Vinylharzen, auch in Kombination mit Thermoplasten, wie Polystyrol, Polyvinylacetat, Polymethylmethacrylat und Styrol/Butadien-Copolymeren, die beispielsweise als schrumpfreduzierende Anteile den Polyesterharzen zugesetzt werden. Weitere Formmassen umfassen insbesondere Polyurethane und Polyamide, die beispielsweise im Reaktions-Spritzgruß-Verfahren eingesetzt werden und ganz besondere Schwierigkeiten bezüglich der Entformbarkeit aufweisen. Andere Formmassen können auch solche auf Basis von Epoxidharzen sein. Diese Epoxidharze werden bevorzugt auf dem Gebiet der Gießmassen und Preßmassen eingesetzt. Weitere Formmassen, die beispielsweise nach dem Naßpreßverfahren, Injektionsverfahren oder Profilziehverfahren verarbeitet werden können, sind Phenol/Formaldehyd-Kondensationsharze, die auch unter dem Begriff Phenolharze bekannt sind.

Diese Formmassen können ebenfalls die gemäß dem Stand der Technik üblichen Zusatzstoffe oder sonstigen Bestandteile enthalten, wie sie auch bereits oben hinsichtlich der Lacke erwähnt wurden. Insbesondere können solche Formmassen Füllstoffe, beispielsweise so genannte verstärkende Füllstoffe enthalten. Zu nennende Füllstoffe sind beispielsweise Glasfasern, Kohlenstofffasern und Polyamidfasern, Wollastonite, Silikate, anorganische Carbonate, Aluminiumhydroxid, Bariumsulfat und Kaolin.

Bezüglich der Mengen der zugesetzten Polysiloxan-Polyoxazolin-Copolymere und der Härtungstemperaturen der Formmassen gilt das Gleiche wie im Hinblick auf die oben beschriebenen Beschichtungsmittelzusammensetzungen.

Anfolgend wird die Erfindung anhand von Beispielen näher beschrieben.

Beispiele

Abkürzungen, Handelsnamen:

pTsOMe = p-Toluolsulfonsäuremethylester
EtOxa = 2-Ethyl-2-oxazolin
MeOxa = 2-Methyl-2-oxazolin
eCL = epsilon-Caprolacton
ESA = Essigsäureanhydrid
DBTL = Dibutylzinndilaurat
PMI = Polymolekularitätsindex
AZ = Aminzahl
OHZ = Hydroxyzahl

Messverfahren:

<u>NMR-Spektroskopie:</u>

NMR-Messungen wurden mit einem NMR-Gerät (Bruker DPX 300) bei 300 MHz ($^{1}H$) bzw. 75 MHz ($^{13}C$) durchgeführt. Als Lösemittel wurden deuteriertes Chloroform und deuteriertes Dimethylsulfoxid verwendet.

<u>Festkörperbestimmung</u>

2 g Probe werden in eine vorher getrocknete Aluminiumschale eingewogen und 10 Minuten bei 150°C im

Trockenschrank getrocknet, im Exsikkator abgekühlt, und dann zurückgewogen. Der Rückstand entspricht dem Festkörperanteil.

Hydroxyzahl

Alkoholische Hydroxygruppen werden durch Acetylierung mit einem Überschuss Essigsäureanhydrid umgesetzt. Anschließend wird das überschüssige Essigsäureanhydrid durch Wasserzugabe zur Essigsäure aufgespalten und mit ethanolischer KOH zurücktritiert. Die Hydroxyzahl ist die Menge KOH in mg, die der bei der Acetylierung von 1g Substanz gebundenen Menge Essigsäure äquivalent ist.

Aminzahl

Aminhaltige Substanzen werden mit HCl titriert. Unter der Aminzahl wird die Menge KOH in mg verstanden, die dem Aminanteil von 1g Substanz entspricht.

Zahlenmittleres Molekulargewicht ($M_n$)

Die Bestimmung des Mn erfolgte mittels GPC gegen einen Polysiloxan- oder Polystyrolstandard.

Beispiel 1: Monoaminofunktionelles Polydimethylsiloxan

In einem mit Rührer, Thermometer, Tropftrichter, Rückflusskühler und Stickstoffeinleitungsrohr versehenen Vierhalskolben werden mono-SiH-funktionelles Polydimethylsiloxan (250 g, $M_n \approx 2000$ g/mol) und Karstedt Katalysator (4,38 g, 0,2%ige Anlösung in Xylol) vorgelegt, gut durchmischt und auf 100 °C erhitzt. Allylamin (9,29 g) wird während 30 Minuten zugetropft. Die Umsetzung des mono-SiH-funktionellen Polydimethylsiloxans wird mittels gasvolumetrischer Bestimmung verfolgt. Nach vollständiger Umsetzung wird das überschüssige Allylamin abdestilliert. Die gemessene Aminzahl des Produktes beträgt 22,5 mg KOH/g.

Beispiel 2: Monoaminofunktionelles Polydimethyisiloxan

In einem mit Rührer, Thermometer, Tropftrichter, Rückflusskühler und Stickstoffeinleitungsrohr versehenen Vierhalskolben werden mono-SiH-funktionelles Polydimethylsiloxan (1500 g, $M_n \approx 5000$ g/mol) und Karstedt Katalysator (6,56 g, 0,8%ige Anlösung in Xylol) vorgelegt, gut durchmischt und auf 100 °C erhitzt. Allylamin (39,8 g) wird während 30 Minuten zugetropft. Die Umsetzung des mono-SiH-funktionellen Polydimethylsiloxans wird mittels gasvolumetrischer Bestimmung verfolgt. Nach vollständiger Umsetzung wird das überschüssige Allylamin abdestilliert. Die gemessene Aminzahl des Produktes beträgt 9 mg KOH/g.

Beispiel 3: alpha, omega-dihydroxyfunktionelles Polydimethylsiloxan

In einem mit Rührer, Thermometer, Tropftrichter, Rückflusskühler und Stickstoffeinleitungsrohr versehenen Vierhalskolben werden di-SiH-funktionelles Polydimethylsiloxan (400 g, $M_n \approx 3000$ g/mol) und Karstedt Katalysator (1 g, 0,2%ige Anlösung in Xylol) vorgelegt und auf 55 °C erhitzt. Die Zudosierung von Allylglycol (33,7 g) erfolgt in der Art, dass die Temperatur 75 °C nicht überschreitet. Die Umsetzung des di-SiH-funktionellen Polydimethylsiloxans wird mittels gasvolumetrischer Bestimmung verfolgt. Nach vollständiger Umsetzung wird das überschüssige Allylglycol abdestilliert. Die gemessene Hydroxyzahl des Produktes beträgt 33,4 mg KOH/g.

Beispiel 4: Monohydroxyfunktionelles Polydimethylsiloxan

In einem mit Rührer, Thermometer, Tropftrichter, Rückflusskühler und Stickstoffeinleitungsrohr versehenen Vierhalskolben werden mono-SiH-funktionelles

Polysiloxan (300 g, $M_n \approx 2000$ g/mol) und Karstedt Katalysator (0,75 g, 0,2%ige Anlösung in Xylol) vorgelegt und auf 55 °C erhitzt. Die Zudosierung von Allylglycol (19,9 g) erfolgt in der Art, dass die Temperatur 75 °C nicht überschreitet. Die Umsetzung des mono-SiH-funktionellen Polysiloxans wird mittels gasvolumetrischer Bestimmung verfolgt. Nach vollständiger Umsetzung wird das überschüssige Allylglycol abdestilliert. Die gemessene Hydroxyzahl des Produktes beträgt 23,9 mg KOH/g.

Beispiel 5: Monohydroxyfunktionelles Polydimethylsiloxan

In einem mit Rührer, Thermometer, Tropftrichter, Rückflusskühler und Stickstoffeinleitungsrohr versehenen Vierhalskolben werden mono-SiH-funktionelles Polydimethylsiloxan (500 g, $M_n \approx 5000$ g/mol) und Karstedt Katalysator (1 g, 0,2%ige Anlösung in Xylol) vorgelegt und auf 55 °C erhitzt. Die Zudosierung von Allylglycol (13,1 g) erfolgt in der Art, dass die Temperatur 75 °C nicht überschreitet. Die Umsetzung des mono-SiH-funktionellen Polydimethylsiloxans wird mittels gasvolumetrischer Bestimmung verfolgt. Nach vollständiger Umsetzung wird das überschüssige Allylglycol abdestilliert. Die gemessene Hydroxyzahl des Produktes beträgt 10,2 mg KOH/g.

Allgemeine Synthesevorschrift für Polyoxazolin-Polysiloxan-Copolymere

In einem mit Tropftrichter, Rührer, Thermometer und Kühler versehenen Vierhalskolben wird p-Toluolsulfonsäuremethylester, die Hälfte des Oxazolins und die Hälfte des Lösungsmittels (vergleiche Tabelle 1) vorgelegt. Bei 50 °C wird die andere Hälfte des Oxazolins in der anderen Hälfte des Lösungsmittels zudosiert. Das Gemisch wird nach Zudosierung bei 75 °C bis zur quantitativen Umsetzung des Monomeren gerührt. Die Reaktionskontrolle wird mittels NMR durchgeführt. Anschließend wird jeweils ein aminofunktionelles Polydimethylsiloxan langsam zudosiert (vergleiche Tabelle 1). Das Gemisch wird weitere zwei Stunden bei 75 °C gerührt. Das Lösungsmittel wird abdestilliert.

Entsprechend der allgemeinen Vorschrift wurden folgende Polyoxazolin-Polysiloxan-Copolymere hergestellt:

Tabelle 1 (erfindungsgemäße Beispiele 6 bis 13)

| Beispiel | pTsOMe | Oxazolin | Silikon | Lösungsmittel |
|---|---|---|---|---|
| Beispiel 6 | 6,61 g | EtOxa 35,1 g | PDMS 3345[1] 50 g | Toluol 39 g |
| Beispiel 7 | 6,61 g | EtOxa 75,8 g | PDMS 3345[1] 50 g | Toluol 54 g |
| Beispiel 8 | 3,76 g | EtOxa 9,99 g | Beispiel 1 50 g | Toluol 27 g |
| Beispiel 9 | 3,76 g | EtOxa 20,0 g | Beispiel 1 50 g | Acetonitril 31g |
| Beispiel 10 | 3,76 g | EtOxa 40,0 g | Beispiel 1 50 g | Acetonitril 40 g |
| Beispiel 11 | 1,15 g | EtOxa 12,2 g | Beispiel 2 50 g | Acetonitril 43 g |
| Beispiel 12 | 6,61 g | MeOxa 35,1 g | PDMS 3345[1] 50 g | Toluol 39 g |
| Beispiel 13 | 3,76 g | MeOxa 20,0 g | Beispiel 1 50 g | Acetonitril 32 g |
| [1] PDMS 3345 = alpha, omega-diaminofunktionelles Polydimethylsiloxan von Wacker AZ = 39 | | | | |

Allgemeine Synthesevorschrift für polyestermodifizierte Polydimethylsiloxane

Ein hydroxyfunktionelles Polydimethylsiloxan, epsilon-Caprolacton und Shellsol A werden in einem mit Tropftricher, Rührer, Thermometer und Kühler versehenen Vierhalskolben eingewogen und in Stickstoffatmosphäre auf 160°C erhitzt. Anschließend werden 0,3 Gew.-% (bezogen auf den Gesamtansatz) einer 10%-igen DBTL Lösung in Xylol zugegeben. Der Ansatz wird solange bei 160°C gerührt bis sämtliches epsilon-Caprolacton umgesetzt ist. Die Umsatzkontrolle erfolgte mittels Festkörperbestimmung. Anschließend wird der Ansatz auf 90°C gekühlt und Essigsäureanhydrid zugegeben. Zusätzlich werden 0,05 Gew.-% 1-Methylimidazol zugegeben. Der Ansatz wird 3 Stunden bei 90°C gerührt. Das Lösemittel und überschüssiges Essigsäureanhydrid werden abdestilliert.

Entsprechend der allgemeinen Vorschrift wurden folgende polyestermodifizierte Polydimethylsiloxane hergestellt:

Tabelle 2 (Vergleichsbeispiele 1 bis 6)

| Beispiel | Silikon | eCL | ESA | Shellsol A |
|---|---|---|---|---|
| Vergleichsbeispiel 1 | Beispiel 3 100 g | 59,5 g | 9,11 g | 16 g |
| Vergleichsbeispiel 2 | Beispiel 3 75 g | 89,3 g | 6,61 g | 33 g |
| Vergleichsbeispiel 3 | Beispiel 4 200 g | 42,6 g | 15,34 g | - |
| Vergleichsbeispiel 4 | Beispiel 4 130 g | 55,4 g | 8,48 g | 37 g |

(fortgesetzt)

| Beispiel | Silikon | eCL | ESA | Shellsol A |
|---|---|---|---|---|
| Vergleichsbeispiel 5 | Beispiel 4 150 g | 127,8 g | 9,78 g | 9 g |
| Vergleichsbeispiel 6 | Beispiel 5 50 g | 36,36 g | 3,3 g | 103 g |

Vergleichsbeispiel 7: polyethermodifiziertes Polydimethylsiloxan

In einem mit Tropftricher, Rührer, Thermometer und Kühler versehenen Vierhalskolben wird mono-SiH-funktionelles Polydimethylsiloxan (78 g), Dowanol PMA (200 g), Toluol (25 g) und Allylpolyether (Allyl-(Ethylenoxid(EO)/Propylenoxid(PO))-OH mit einem EO:PO Verhältnis von 1:1 und einem zahlenmittleren Molekulargewicht von 4000 g/mol, 82,18 g) eingewogen und auf 100°C erhitzt. Es werden 2,32 g einer 0,6 %-igen Speiers Lösung zugegeben. Die Umsetzung des mono-SiH-funktionellen Polysiloxans wird mittels gasvolumetrischer Bestimmung verfolgt. Nach vollständiger Umsetzung wird das Lösungsmittel zum Teil abdestilliert und nach abkühlen auf 90°C wird Essigsäureanhydrid zugegeben. Zusätzlich werden 0,05 Gew.-% 1-Methylimidazol zugegeben. Der Ansatz wird 5 Stunden bei 90°C gerührt. Das Lösemittel und überschüssiges Essigsäureanhydrid werden abdestilliert.

Thermogravimetrische Analyse

Eine thermogravimetrische Analyse (Gerät: TGAQ5000 der Firma TA) von den Beispielen 7 und 10, sowie den Vergleichsbeispielen 2 und 5 wurde durchgeführt (Tabelle 3). Hierzu wurde die Probe in einem Aluminiumtiegel eingewogen und unter Luft von 30°C auf 400°C mit einer Geschwindigkeit von 10K/min erhitzt. Anschließend wurde der Restgehalt an Substanz in Gew.-% bestimmt.

Tabelle 3 (thermogravimetrische Analyse)

| Nummer | Restgehalt [%] |
|---|---|
| Beispiel 7 | 63,2 |
| Vergleichsbeispiel 2 | 50,9 |
| | |
| Beispiel 10 | 59,43 |
| Vergleichsbeispiel 5 | 42,1 |

Die Ergebnisse zeigen, dass die erfindungsgemäßen Copolymere eine signifikant bessere thermische Stabilität aufweisen als die polyestermodifizierten Polysiloxane.

Untersuchung anwendungstechnischer Eigenschaften

Unter Verwendung der gemäß obigen Beispielen hergestellten Polysiloxan-Copolymere wurden unterschiedliche Beschichtungsmittelzusammensetzungen hergestellt. Mit Hilfe dieser Beschichtungsmittelzusammensetzungen wurden Beschichtungen auf unterschiedlichen Substraten hergestellt. Es wurden unterschiedliche Eigenschaften der Beschichtungsmittelzusammensetzungen sowie Beschichtungen untersucht. Die untersuchten Beschichtungsmittelzusammensetzungen und Beschichtungen, deren Eigenschaften sowie die dazu gehörigen Analyseverfahren sind in der Folge beschrieben.

System 1: Migrationsverhalten

Zusammensetzung der Beschichtungsmittelzusammensetzungen, Herstellung der Beschichtungen:

Goldlack auf Basis von Phenodur PR285

| Zusammensetzung (Angaben in Gewichtsteilen): | |
|---|---|
| Phenodur PR 285/55%ig | 15,0 |
| Epikote 1007 (50% in Dowanol PM) | 62,2 |
| Maprenal MF 800/ 55%ig | 1,7 |
| Solvesso 150ND | 11,5 |
| Dowanol PM | 9,6 |

Phenodur PR 285/55%ig = härtbares Phenolharz von Cytec
Epikote 1007 (50% in Dowanol PM) = Epoxyharz auf Basis von Bisphenol A von Resolution Performance Products
Maprenal MF 800/ 55%ig = isobutyliertes Melamin-Formaldehydharz von INEOS Melamines, Inc.

Stanzlack auf Basis Uralac SN 852

| Zusammensetzung (Angaben in Gewichtsteilen): | |
|---|---|
| Uralac SN 852 (60% in Solvesso 150ND) | 17,1 |
| Disperbyk 110 | 0,9 |
| Kronos 2310 | 30,0 |
| Butyldiglykolacetat | 3,3 |
| - Dissolver 15min 5000U/min, Zahnscheibe 6cm, 350mL Gefäß | |
| Uralac SN 852 (60% in Solvesso 150ND) | 24,0 |
| Solvesso 150ND | 6,9 |
| Maprenal MF 980 (62% in Butanol) | 6,0 |
| Epikote 834 (80% in SE 150D) | 10,3 |
| Butyldiglykolacetat | 1,5 |

Uralac SN 852 = Acrylatharz auf Basis 2-Methoxy-1-methylmethacrylat von DSM Coatings Resins
Maprenal MF 980 = Benzoguanamin-Formaldehyd-Harz n-butylverethert von INEOS Melamines GmbH
Epikote 834 = Epoxidharz auf Basis Bisphenol A von Hexion Specialty Chemicals B.V.
Kronos 2310 = Titandioxid Rutil von Kronos International
Disperbyk 110 = Netz und Dispergieradditiv Lösung eines Copolymeren mit sauren Gruppen von Byk-Chemie GmbH

Die Additive, 0,02% Wirksubstanz auf Gesamtfomulierung, werden zunächst von Hand in den Goldlack eingerührt. Anschließend wird für 10 Minuten mit einem Skandex-Rüttler gemischt. Einen Tag nach dem Mischen beziehungsweise Rütteln werden die additivierten Goldlacke mit einem 30 µm Spiralrakel auf ein Weißblech (Krüppel E1 elektrolytisch verzinntes Weißblech) aufgezogen. Die Lacke werden 12 Minuten bei 190°C eingebrannt.

Analyseverfahren:

Der Verlauf wird visuell beurteilt. (1= guter Verlauf, 5= schlechter Verlauf)

Zur Bestimmung des Migrationsverhaltens werden auf 9,5 cm x 9,5 cm zugeschnittene, mit dem additivierten Goldlack beschichtete Bleche aufeinander gestapelt, so dass die beschichtete Seite mit der blanken Rückseite des darüber liegenden Bleches in Kontakt ist. Der Stapel wird in einen Blocktester (Abbildung 1) eingespannt und mit einem Drehmomentschlüssel wird eine Belastung von 20 Newton eingestellt. Anschließend wird der Blocktester mit den eingespannten Blechen für 24h in den 60° Ofen gestellt. Danach werden die Bleche aus dem Blocktester geholt und auf die blanke Seite wird mit einem 35 µm Spiralrakel der Stanzlack aufgezogen. Je schlechter die Benetzung der zuletzt lackierten Seite, desto mehr Silikon ist von dem darunter gestapelten Blech migriert. Beurteilt wurde visuell (Noten 1 - 5, 1 = keine Migration des Additivs; 5 = starke Migration des Additivs).

Zur Bestimmung des COF-Wertes (Gleitwiderstand) werden die applizierten Bleche mit dem Altek 9505AER-Gerät vermessen. Dabei wird ein 1 kg Gewicht mit der Geschwindigkeit 127 mm/min über das Blech gezogen. Der erhaltene Wert wird zur Berechnung des COF-Wertes mit dem Faktor 0,01 multipliziert. Ein niedriger Wert entspricht demnach einem niedrigen Gleitwiderstand.

Die erhaltenen Ergebnisse sind in Tabelle 4 dargestellt.

Tabelle 4 (anwendungstechnische Eigenschaften)

| Additiv im Goldlack | Verlauf | COF | Migration |
|---|---|---|---|
| Probe ohne Additiv | 1 | 0,53 | 1-2 |
| Beispiel 6 | 1-2 | 0,28 | 1-2 |
| Beispiel 8 | 1-2 | 0,11 | 2 |
| Beispiel 9 | 1-2 | 0,15 | 2 |
| Beispiel 10 | 1 | 0,12 | 1-2 |
| Vergleichsbeispiel 1 | 2 | 0,09 | 4 |
| Vergleichsbeispiel 3 | 1-2 | 0,12 | 5 |
| Vergleichsbeispiel 4 | 1-2 | 0,05 | 5 |
| Vergleichsbeispiel 5 | 1-2 | 0,07 | 4 |

Die Ergebnisse zeigen, dass durch die Verwendung der erfindungsgemäß einzusetzenden Copolymere aus den Beispielen 6, 8, 9 und 10 ein guter Verlauf erhalten wird und wie bei den Vergleichssystemen mit Polyestermodifizierungen eine wesentliche Reduzierung des Gleitwiderstandes erreicht wird. Zudem zeichnen sich die erfindungstypischen Beispiele durch eine wesentlich geringere Migration und somit der Gewährleistung einer besseren Überlackierbarkeit aus.

<u>System 2 : Easy-to-clean / Zwischenschichthaftung</u>

Zusammensetzung der Beschichtungsmittelzusammensetzungen, Herstellung der Beschichtungen:

<u>Acrylat/Melamin-Einbrennlack, klar</u>

Zusammensetzung (Angaben in Gewichtsteilen):

| | |
|---|---|
| Setalux 1756 VV-65, 65%ig | 60 |
| Setamine US 138 BB-70, 70%ig | 24 |
| Shellsol A | 8 |
| Xylol | 8 |

Setalux 1756 VV-65, 65%ig = Acrylat Einbrennharz, 65%ig in Shellsol A Nuplex Resins, Bergen op Zoom
Setamine US 138 BB-70, 70%ig = Melamin Einbrennharz, 70%ig in n-Butanol Nuplex Resins, Bergen op Zoom

Die Additive, 0,05% Wirksubstanz auf Gesamtformulierung, werden zunächst von Hand eingerührt. Anschließend wurde 10 Minuten mit einem Skandex-Rüttler gemischt. Einen Tag nach dem Mischen beziehungsweise Rütteln werden die additivierten Lacke mit einem 150 μm Kastenrakel nass auf Glasplatten und geprimerte Stahlbleche (ST 1405) aufgezogen. Die Bleche werden nach 30 min Ablüftzeit bei 25°C 25 min bei 140°C eingebrannt. Für die Prüfung der Zwischenschichthaftung wurde die Aushärtung im Gradientenofen jeweils auch bei 170°C, 200°C und 230°C durchgeführt.

<u>Analyseverfahren:</u>

Die Oberflächenspannungsmessung (OFS) wurde mit einem Tensiometer der Firma Krüss mit der Ringmethode nach DIN 53914 durchgeführt.

Die Beurteilung der Trübung erfolgte visuell anhand der Glasplatten.
1 = keine Trübung 5 = sehr trüb

Die Bestimmung des Gleitwiderstandes (slip) beziehungsweise der Reduzierung des Gleitwiderstands erfolgte mit dem Slip-Messgerät nach der anwendungstechnischen Prüfmethode APM-001 der BYK-Chemie GmbH. Hierzu wird der zu prüfende Beschichtungsstoff auf 10x40 cm große Glasplatten, die zuvor in der Spülmaschine gereinigt wurden, appliziert. Die Platte wir auf eine Aufziehbank geklemmt und so positioniert, dass ein 500g-Gewicht mittig auf die Beschichtung gestellt werden kann. Es sollen 1-2 mm Platz zwischen Gewicht und Kraftaufnehmer bleiben. Das Gewicht wird mit einer Geschwindigkeit von 50mm/sec über die Probe geschoben. Die Messungen werden gegen eine Standard-Probe (Null-Probe, kein Additiv) durchgeführt, auf die bei der Auswertung als Bezug genommen wird.

Bei der Auswertung wird die Slipreduzierung in % berechnet. Die in unten stehender Tabelle 5 angegebene Slipreduzierung wird wie folgt berechnet:

a= COF-Wert des Standards
b= COF-Wert der Probe

$$\text{Reduzierung des Gleitwiderstandes} = \frac{(a-b)*100\%}{a}$$

Edding-Test:

Es wird mit einem Permanent-Marker der Type "Edding 400" die Lackoberfläche beschriftet und visuell beurteilt, ob die Oberfläche beschreibbar ist. Es wird beurteilt, ob die Tinte auf der Oberfläche spreitet oder sich zusammenzieht. Nach dem Trocknen der Tinte wird versucht diese mit einem trockenen Tuch abzuwischen.

Bewertung (visuell) nach Noten 1 - 5:

1 = Tinte zieht sich zusammen, lässt sich restlos mit einem Papiertuch entfernen
5 = Tinte spreitet sehr gut auf dem Untergrund, lässt sich praktisch nicht entfernen

Mineralöl-Ablauftest:

Es wird ein Tropfen handelsübliches Mineralöl auf die Lackoberfläche gegeben. Anschließend wird die beschichtete Lackoberfläche gekippt, bis der Tropfen etwa 10 cm gelaufen ist. Nach Ablauf von 5 Minuten wird die Ölspur bzw. eine erneute Tropfenbildung visuell bewertet.

Bewertung (visuell) nach Noten 1 - 5:

1 = Die Ölspur bildet sich sofort in einzelne Tropfen zurück
5 = Die Ölspur bildet sich nicht zurück, sondern spreitet eventuell weiter

Die erhaltenen Ergebnisse sind in Tabelle 5 dargestellt.

Tabelle 5 (anwendungstechnische Eigenschaften)

| | OFS | Trübung | Slip | Edding | Öl |
|---|---|---|---|---|---|
| Probe ohne Additiv | 28,9 | 1 | - | 5 | 5 |
| Beispiel 7 | 25,4 | 1 | 76% | 1 | 1 |
| Beispiel 11 | 24,5 | 1 | 73% | 1 | 2 |
| Vergleichsbeispiel 2 | 25,8 | 1 | 75% | 1 | 1 |
| Vergleichsbeispiel 6 | 24,8 | 1 | 77% | 1 | 1 |
| Vergleichsbeispiel 7 | 24,5 | 1 | 76% | 5 | 5 |

Bei der Oberflächenspannung, Trübung und der Reduzierung des Gleitwiderstandes werden ähnliche Eigenschaften wie mit den additivierten Vergleichsprodukten erhalten. Zudem zeigen die mit den erfindungstypischen Beispielen additivierten Lacke eine deutliche Verbesserung der schmutz- und ölabweisenden Eigenschaften.

Zwischenschichthaftung beziehungsweise Überlackierbarkeit:

Zur Bestimmung der Zwischenschichthaftung werden die Proben mit einem Kastenrakel mit einer Nassschichtdicke von 150 µm auf ein geprimertes Stahlblech appliziert und im Gradientenofen bei 140, 170, 200 beziehungsweise 230°C eingebrannt. Danach wird eine weitere Schicht der jeweiligen Probe appliziert und bei 140°C im Umluftofen ausgehärtet. Anschließend wird für jeden Temperaturbereich eine Gitterschnittprüfung nach DIN 53151 durchgeführt. Die Zwischenschichthaftung wird anhand von Noten (Note 1 - 5, 1 entspricht einer sehr guten Zwischenschichthaftung, 5 entspricht einer schlechten Zwischenschichthaftung) bewertet.

Die erhaltenen Ergebnisse sind in der folgenden Tabelle dargestellt:

| | **140°C** | **170°C** | **200°C** | **230°C** |
|---|---|---|---|---|
| Probe ohne Additiv | 1 | 1 | 1 | 5 |
| Beispiel 7 | 1 | 1 | 1 | 1 |
| Beispiel 11 | 1 | 1 | 3 | 5 |
| Vergleichsbeispiel 2 | 1 | 2 | 5 | 5 |
| Vergleichsbeispiel 6 | 1 | 5 | 5 | 5 |
| Vergleichsbeispiel 7 | 3 | 5 | 5 | 5 |

Die erhaltenen Ergebnisse zeigen, dass die erfindungsgemäßen Beispiele eine bessere Zwischenschichthaftung beziehungsweise Überlackierbarkeit gewährleisten.

Kontaktwinkel:

Die Kontaktwinkel mit Wasser wurden mit dem Kontaktwinkelmessgerät Krüss G2 als fortschreitende Kontaktwinkel gemessen. Es wurden 8 µl vordosiert und von 8 µl-12 µl 10 Kontaktwinkel an jeder Tropfenseite bestimmt. Der angegebene Wert ist der Mittelwert der Messungen.

| | **Kontaktwinkel** |
|---|---|
| Probe ohne Additiv | 89 |
| Beispiel 7 | 103 |
| Beispiel 11 | 102 |

Die erhaltenen Ergebnisse zeigen, dass die Additivierung zu einer Hydrophobierung der Oberfläche führt.

Insgesamt zeigen die erfindungsgemäßen Systeme eine hervorragende Balance von Schmutzabweisung einerseits und Überlackierbarkeit andererseits. Dabei bleiben weitere wichtige Eigenschaften, wie ein guter Verlauf und ein geringer Gleitwiderstand vollständig erhalten.

## Patentansprüche

1. Verwendung von Polysiloxan-Polyoxazolin-Copolymeren als Additive in thermisch härtenden Beschichtungsmittelzusammensetzungen und Formmassen.

2. Verwendung gemäß Anspruch 1, **dadurch gekennzeichnet, dass** die Polysiloxan-Polyoxazolin-Copolymere Polysiloxanblöcke umfassen, die Einheiten der Strukturformel (I)

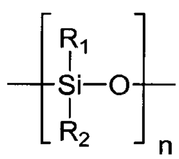

(I)

enthalten,

wobei n für 1 bis 400 steht und
$R_1$ und $R_2$ unabhängig voneinander für gesättigte lineare Alkylreste mit 1 bis 6 Kohlenstoffatomen, gesättigte verzweigte Alkylreste mit 3 bis 6 Kohlenstoffatomen, gesättigte zyklische Alkylreste mit 4 bis 6 Kohlenstoffatomen und/oder lineare Alkenylreste mit 2 bis 6 Kohlenstoffatomen, verzweigte Alkenylreste mit 3 bis 6 Kohlenstoffatomen oder zyklische Alkenylreste mit 4 bis 6 Kohlenstoffatomen und/oder Arylreste, Alkylarylreste und/oder Arylalkylreste mit 6 bis 12 Kohlenstoffatomen, wobei die Reste gegebenenfalls halogensubstituiert sind, stehen.

3. Verwendung gemäß Anspruch 2, **dadurch gekennzeichnet, dass** $R_1$ und $R_2$ unabhängig voneinander für einen Methyl-, Ethyl-, Propyl-, Butyl-, fluorierten Alkylrest und/oder einen Phenylrest und/oder einen halogen- und/oder alkylsubstituierten Phenylrest stehen.

4. Verwendung gemäß Anspruch 1, **dadurch gekennzeichnet, dass** die Polysiloxan-Polyoxazolin-Copolymere Polyoxazolinblöcke umfassen, die Einheiten der Strukturformel (B)

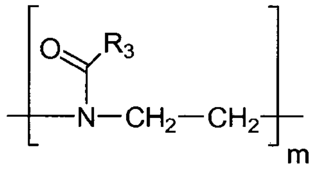
(B)

enthalten,

wobei m für 1 bis 400 und
$R_3$, jeweils unabhängig von den gegebenenfalls anderen Resten $R_3$, für Wasserstoff, einen gesättigten linearen oder verzweigten Alkylrest mit 1 bis 12 Kohlenstoffatomen, ein linearen oder verzweigten Alkenylrest mit 3 bis 12 Kohlenstoffatomen oder ein Arylrest mit 6 bis 10 Kohlenstoffatomen steht.

5. Verwendung gemäß Anspruch 4, **dadurch gekennzeichnet, dass** $R_3$, jeweils unabhängig von den gegebenenfalls anderen Resten $R_3$, für einen Methyl- oder Ethylrest steht.

6. Verwendung gemäß einem der Ansprüche 1 bis 5, **dadurch gekennzeichnet, dass** die Polysiloxan-Polyoxazolin-Copolymere Polysiloxanblöcke umfassen, die aus der folgenden Strukturformel (II)

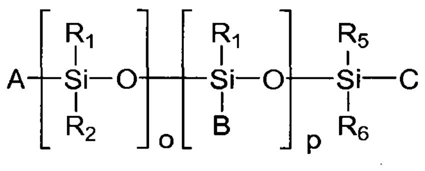
(II)

bestehen, wobei

o für 0 bis 400 und p für 0 bis 400 steht;
$R_5$ und $R_6$ unabhängig voneinander für $R_1$ oder $R_2$ oder für $R_4[SiR_1R_2O]_q$ stehen, worin q für 1 bis 400 und $R_4$ für einen gesättigten linearen Alkylrest mit 1 bis 30 Kohlenstoffatomen, einen verzweigten Alkylrest mit 3 bis 30 Kohlenstoffatomen, einen zyklischen Alkylrest mit 4 bis 30 Kohlenstoffatomen und/oder einen Arylrest, einen Alkylarylrest und/oder einen Arylalkylrest mit 6 bis 30 Kohlenstoffatomen, wobei die Reste gegebenenfalls halogensubstituiert sind, steht;
A und C unabhängig voneinander für B oder $R_4$ stehen, und
B für einen linearen oder verzweigten Alkyl- oder Aralkylrest oder einen Linker mit einer linearen oder verzweigten Alkylen- oder Aralkylenstruktur, welche Stickstoff und Sauerstoffatome enthalten kann steht, mit der Maßgabe, dass pro Siloxanblock (II) mindestens ein solcher Linker vorhanden ist.

7. Verwendung gemäß Anspruch 6, **dadurch gekennzeichnet, dass** der Linker ein aminofunktioneller Linker $(CH_2)_t-R_{10}-R_{11}-R_{12}-NR_{14}-$ ist, wobei
t für 2 bis 30 steht;
$R_{10}$ für $(CH_2)_u$, O, S, $NR_{14}$ oder $(C_6R_{15})_4$ steht, wobei u gleich 0 oder 1 ist und $R_{14}$ für Wasserstoff oder einen

gesättigten linearen Alkylrest mit 1 bis 6 Kohlenstoffatomen, einen gesättigten verzweigten Alkylrest mit 3 bis 6 Kohlenstoffatomen oder einen Arylrest, Alkylarylrest oder Arylalkylrest mit 6 bis 9 Kohlenstoffatomen und $R_{15}$ für Wasserstoff und/oder einen Alkylrest mit 1 bis 6 Kohlenstoffatomen steht;
$R_{11}$ für $(CH_2)_v$ oder $(CH_2CHR_{16}O)_w$ steht, wobei v gleich 0 bis 30 und w gleich 0 bis 50 ist und $R_{16}$ für Wasserstoff oder einen gesättigten linearen Alkylrest mit 1 bis 6 Kohlenstoffatomen, einen gesättigten verzweigten Alkylrest mit 3 bis 6 Kohlenstoffatomen oder einen gesättigten zyklischen Alkylrest mit 4 bis 6 Kohlenstoffatomen steht, und $R_{12}$ für $(CH_2)_x$, worin x gleich 0 bis 3 ist, steht.

8. Verwendung gemäß Anspruch 7, **dadurch gekennzeichnet, dass** der Linker $(CH_2)_3$-NH- ist.

9. Verwendung gemäß einem der Ansprüche 1 bis 8, **dadurch gekennzeichnet, dass** die Polysiloxan-Polyoxazolin-Copolymere als Additiv zum Erhalt einer hohen Kratzfestigkeit, eines geringen Gleitwiderstand, eines verminderten Heraustretens des Additivs aus der Beschichtung und/oder einer guten Schmutzabweisung bei gleichzeitigem Erhalt einer guten Überlackierbarkeit verwendet werden.

10. Verwendung gemäß einem der Ansprüche 1 bis 9, **dadurch gekennzeichnet, dass** die thermisch härtenden Beschichtungsmittelzusammensetzungen und Formmassen bei Temperaturen von über 100°C, gehärtet werden.

11. Verwendung gemäß einem der Ansprüche 1 bis 10, **dadurch gekennzeichnet, dass** die Polysiloxan-Polyoxazolin-Copolymere in den Beschichtungsmittelzusammensetzungen und Formmassen mit einem Anteil von 0,005 bis 5 Gew.-%, bezogen auf die Gesamtzusammensetzung, eingesetzt werden.

12. Verwendung gemäß einem der Ansprüche 1 bis 11, **dadurch gekennzeichnet, dass** die Polysiloxan-Polyoxazolin-Copolymere in Beschichtungsmittelzusammensetzungen verwendet werden, welche Polyurethan-, Polyester-, Polyesterpolyol-, Polyacrylat-, Polymethacrylat-, gemischte Poly(meth)acrylat-, Polyesteracrylat-, Epoxid-, Phenol/Formaldehyd-, Poly(amid-imid)- und/oder Alkydharze als Bindemittel sowie Aminoplastharze, monomere und/oder polymere Polyisocyanate und/oder Hydroxyalkylamide als Vernetzungsmittel enthalten.

13. Verwendung gemäß einem der Ansprüche 1 bis 11, **dadurch gekennzeichnet, dass** die Polysiloxan-Polyoxazolin-Copolymere in Formmassen verwendet werden, welche ungesättigte Polyesterharze, Vinylharze, Polyurethan-, Polyamid-, Phenol/Formaldehyd- und/oder Epoxidharze enthalten.

14. Verwendung gemäß Anspruch 13, **dadurch gekennzeichnet, dass** die Formmassen ungesättigte Polyesterharze und/oder Vinylharze enthalten, die zusätzlich mit Polystyrol, Polyvinylacetat, Polymethylmethacrylat und/oder Styrol/Butadien-Copolymeren kombiniert werden.

15. Thermisch härtende Beschichtungsmittelzusammensetzungen und Formmassen enthaltend Polysiloxan-Polyoxazolin-Copolymere.

16. Beschichtungen auf einem Substrat sowie Formteile, die mit einer Beschichtungsmittelzusammensetzung beziehungsweise einer Formmasse gemäß Anspruch 15 hergestellt wurden.

## Claims

1. The use of polysiloxane-polyoxazoline copolymers as additives in thermally curing coating material compositions and molding compounds.

2. The use as claimed in claim 1, **characterized in that** the polysiloxane-polyoxazoline copolymers comprise polysiloxane blocks which comprise units of the structural formula (I)

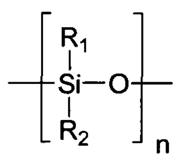

(I)

where n is 1 to 400 and
$R_1$ and $R_2$ independently of one another are saturated linear alkyl radicals having 1 to 6 carbon atoms, saturated branched alkyl radicals having 3 to 6 carbon atoms, saturated cyclic alkyl radicals having 4 to 6 carbon atoms, and/or linear alkenyl radicals having 2 to 6 carbon atoms, branched alkenyl radicals having 3 to 6 carbon atoms or cyclic alkenyl radicals having 4 to 6 carbon atoms, and/or aryl radicals, alkylaryl radicals and/or arylalkyl radicals having 6 to 12 carbon atoms, the radicals being optionally halogensubstituted.

3. The use as claimed in claim 2, **characterized in that** $R_1$ and $R_2$ independently of one another are a methyl, ethyl, propyl, butyl or fluorinated alkyl radical and/or a phenyl radical and/or a halogen-substituted and/or alkyl-substituted phenyl radical.

4. The use as claimed in claim 1, **characterized in that** the polysiloxanepolyoxazoline copolymers comprise polyoxazoline blocks which comprise units of the structural formula (B)

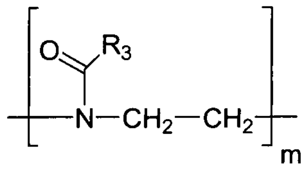

(B)

where m is 1 to 400 and
$R_3$, in each case independently of any other radicals $R_3$, is hydrogen, a saturated linear or branched alkyl radical having 1 to 12 carbon atoms, a linear or branched alkenyl radical having 3 to 12 carbon atoms, or an aryl radical having 6 to 10 carbon atoms.

5. The use as claimed in claim 4, **characterized in that** $R_3$, in each case independently of any other radicals $R_3$, is a methyl or ethyl radical.

6. The use as claimed in any of claims 1 to 5, **characterized in that** the polysiloxane-polyoxazoline copolymers comprise polysiloxane blocks which consist of the following structural formula (II)

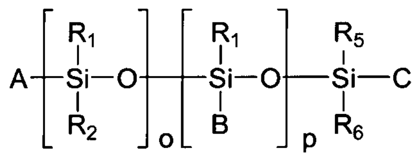

(II)

where

o is 0 to 400 and p is 0 to 400;
$R_5$ and $R_6$ independently of one another are $R_1$ or $R_2$ or are $R_4[SiR_1R_2O]_q$, in which q is 1 to 400 and $R_4$ is a saturated linear alkyl radical having 1 to 30 carbon atoms, a branched alkyl radical having 3 to 30 carbon atoms, a cyclic alkyl radical having 4 to 30 carbon atoms, and/or an aryl radical, an alkylaryl radical, and/or an arylalkyl radical having 6 to 30 carbon atoms, the radicals being optionally halogen-substituted;
A and C independently of one another are B or $R_4$, and
B is a linear or branched alkyl or aralkyl radical or a linker having a linear or branched alkylene or aralkylene structure which may comprise nitrogen and oxygen atoms, with the proviso that there is at least one such linker per siloxane block (II).

7. The use as claimed in claim 6, **characterized in that** the linker is an aminofunctional linker $(CH_2)_t$-$R_{10}$-$R_{11}$-$R_{12}$-$NR_{14}$-, where
t is 2 to 30;
$R_{10}$ is $(CH_2)_u$, O, S, $NR_{14}$ or $(C_6R_{15})_4$, where u is 0 or 1 and $R_{14}$ is hydrogen or a saturated linear alkyl radical having 1 to 6 carbon atoms, a saturated branched alkyl radical having 3 to 6 carbon atoms, or an aryl radical, alkylaryl radical or arylalkyl radical having 6 to 9 carbon atoms, and $R_{15}$ is hydrogen and/or an alkyl radical having 1 to 6 carbon atoms;

$R_{11}$ is $(CH_2)_v$ or $(CH_2CHR_{16}O)_w$, where v is 0 to 30 and w is 0 to 50 and $R_{16}$ is hydrogen or is a saturated linear alkyl radical having 1 to 6 carbon atoms, a saturated branched alkyl radical having 3 to 6 carbon atoms, or a saturated cyclic alkyl radical having 4 to 6 carbon atoms; and
$R_{12}$ is $(CH_2)_x$, in which x is 0 to 3.

**8.** The use as claimed in claim 7, **characterized in that** the linker is $(CH_2)_3$-NH-.

**9.** The use as claimed in any of claims 1 to 8, **characterized in that** the polysiloxane-polyoxazoline copolymers are used as additives for obtaining high scratch resistance, low slip resistance, reduced emergence of the additive from the coating, and/or effective dirt repellence in conjunction with effective recoatability.

**10.** The use as claimed in any of claims 1 to 9, **characterized in that** the thermally curing coating material compositions and molding compounds are cured at temperatures of above 100°C.

**11.** The use as claimed in any of claims 1 to 10, **characterized in that** the polysiloxane-polyoxazoline copolymers are used in the coating material compositions and molding compounds with a fraction of 0.005 to 5 wt%, based on the overall composition.

**12.** The use as claimed in any of claims 1 to 11, **characterized in that** the polysiloxane-polyoxazoline copolymers are used in coating material compositions which comprise polyurethane, polyester, polyesterpolyol, polyacrylate, polymethacrylate, mixed poly(meth)acrylate, polyesteracrylate, epoxy, phenol/formaldehyde, poly(amide-imide) and/or alkyd resins as binders and comprise amino resins, monomeric and/or polymeric polyisocyanates and/or hydroxyalkylamides as crosslinking agents.

**13.** The use as claimed in any of claims 1 to 11, **characterized in that** the polysiloxane-polyoxazoline copolymers are used in molding compounds which comprise unsaturated polyester resins, vinyl resins, polyurethane resins, polyamide resins, phenol/formaldehyde resins and/or epoxy resins.

**14.** The use as claimed in claim 13, **characterized in that** the molding compounds comprise unsaturated polyester resins and/or vinyl resins which are additionally combined with polystyrene, polyvinyl acetate, polymethyl methacrylate and/or styrene/butadiene copolymers.

**15.** Thermally curing coating material compositions and molding compounds comprising polysiloxane-polyoxazoline copolymers.

**16.** Coatings on a substrate, and moldings, which have been produced with a coating material composition and, respectively, with a molding compound as claimed in claim 15.

## Revendications

**1.** Utilisation de copolymères polysiloxane-polyoxazoline en tant qu'additifs dans des compositions de revêtement et des masses de moulage thermodurcissables.

**2.** Utilisation selon la revendication 1, **caractérisée en ce que** les copolymères polysiloxane-polyoxazoline comprennent des blocs de polysiloxane contenant des unités de la formule structurelle (I)

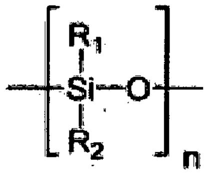

(I),

où n représente de 1 à 400 et
$R_1$ et $R_2$ indépendamment l'un de l'autre représentent des groupements alkyle linéaires et saturés avec 1 à 6 atomes de carbone, des groupements alkyle ramifiés et saturés avec 3 à 6 atomes de carbone, groupements

alkyle cycliques et saturés avec 4 à 6 atomes de carbone et/ou des groupements alcényle linéaires avec 2 à 6 atomes de carbone, des groupements alcényle ramifiés avec 3 à 6 atomes de carbone ou des groupements alcényle cycliques avec 4 à 6 atomes de carbone et/ou des groupements aryle, des groupements alkylaryle et/ou groupements arylalkyle avec 6 à 12 atomes de carbone, les groupements étant, le cas échéant, substitués par halogène.

3. Utilisation selon la revendication 2, **caractérisée en ce que** $R_1$ et $R_2$ représentent, indépendamment l'un de l'autre un groupement méthyle, éthyle, propyle, butyle, ou alkyle fluoré, et/ou un groupement phényle et/ou un groupement phényle substitué par halogène et/ou alkyle.

4. Utilisation selon la revendication 1, **caractérisée en ce que** les copolymères polysiloxane-polyoxazoline comprennent des blocs de polyoxazoline contenant des unités de la formule structurelle (B)

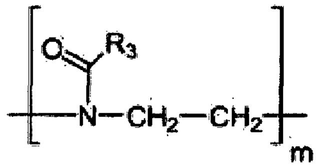

(B),

où m représente de 1 à 400 et
$R_3$ représente, respectivement indépendamment des autres groupements $R_3$ le cas échéant présents, l'hydrogène, un groupement alkyle saturé et linéaire ou ramifié avec 1 à 12 atomes de carbone, un groupement alcényle linéaire ou ramifié avec 3 à 12 atomes de carbone ou un groupement aryle avec 6 à 10 atomes de carbone.

5. Utilisation selon la revendication 4, **caractérisée en ce que** $R_3$ représente, respectivement indépendamment des autres groupements $R_3$ le cas échéant présents, un groupement méthyle ou éthyle.

6. Utilisation selon l'une quelconque des revendications 1 à 5, **caractérisée en ce que** les copolymères polysiloxane-polyoxazoline comprennent des blocs de polysiloxane consistant en la formule structurelle (II) suivante

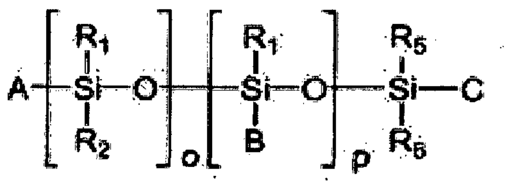

(II),

où

o représente de 0 à 400 et p de 0 à 400;
$R_5$ et $R_6$ indépendamment l'un de l'autre représentent $R_1$ ou $R_2$ ou $R_4[SiR_1R_2O]_q$, où q représente de 1 à 400 et $R_4$ représente un groupement alkyle linéaire et saturé avec 1 à 30 atomes de carbone, un groupement alkyle ramifié avec 3 à 30 atomes de carbone, un groupement alkyle cyclique avec 4 à 30 atomes de carbone et/ou un groupement aryle, un groupement alkylaryle et/ou un groupement arylalkyle avec 6 à 30 atomes de carbone, où les groupements sont, le cas échéant, substitués par halogène;
A et C représentent, indépendamment l'un de l'autre, B ou $R_4$, et
B représente un groupement alkyle ou aralkyle linéaire ou ramifié, ou un groupe de liaison avec une structure alkylène ou aralkylène linéaire ou ramifiée qui peut contenir d'azote et des atomes d'oxygène, à condition qu'au moins un tel groupe de liaison est présent pour chaque bloc de siloxane (II).

7. Utilisation selon la revendication 6, **caractérisée en ce que** le groupe de liaison est un groupe de liaison à fonction amine $(CH_2)_t$-$R_{10}$-$R_{11}$-$R_{12}$-$NR_{14}$-, où
t représente de 2 à 30;
$R_{10}$ représente $(CH_2)_u$, O, S, $NR_{14}$ ou $(C_6R_{15})_4$, où u est 0 ou 1, et $R_{14}$ représente l'hydrogène ou un groupement alkyle linéaire et saturé avec 1 à 6 atomes de carbone, un groupement alkyle saturé et ramifié avec 3 à 6 atomes

de carbone ou un groupement aryle, un groupement alkylaryle ou un groupement arylalkyle avec 6 à 9 atomes de carbone, et $R_{15}$ représente l'hydrogène et/ou un groupement alkyle avec 1 à 6 atomes de carbone;
$R_{11}$ représente $(CH_2)_v$ ou $(CH_2CHR_{16}O)_w$, où v est de 0 à 30 et w est de 0 à 50, et $R_{16}$ représente l'hydrogène ou un groupement alkyle linéaire et saturé avec 1 à 6 atomes de carbone, un groupement alkyle ramifié et saturé avec 3 à 6 atomes de carbone ou un groupement alkyle cyclique et saturé avec 4 à 6 atomes de carbone, et
$R_{12}$ représente $(CH_2)_x$, où x est de 0 à 3.

**8.** Utilisation selon la revendication 7, **caractérisée en ce que** le groupe de liaison est $(CH_2)_3$-NH-.

**9.** Utilisation selon l'une quelconque des revendications 1 à 8, **caractérisée en ce que** les copolymères polysiloxane-polyoxazoline sont utilisées en tant qu'additifs pour obtenir une haute résistance à rayures, une résistance inférieure au glissement, une réduction de la fuite de l'additif du revêtement et/ou une bonne répulsion des salissures, en même temps conservant une bonne capacité de survernissage.

**10.** Utilisation selon l'une quelconque des revendications 1 à 9, **caractérisée en ce que** les compositions de revêtement et les masses de moulage thermodurcissables sont durcies à des températures supérieures à 100°C.

**11.** Utilisation selon l'une quelconque des revendications 1 à 10, **caractérisée en ce que** les copolymères polysiloxane-polyoxazoline dans les compositions de revêtement et les masses de moulage sont utilisées avec une proportion de 0,005 à 5 % en poids, par rapport à la composition totale.

**12.** Utilisation selon l'une quelconque des revendications 1 à 11, **caractérisée en ce que** les copolymères polysiloxane-polyoxazoline sont utilisés dans des compositions de revêtement qui contiennent des résines polyuréthanes, des résines de polyester, des résines de polyester polyol, des résines de polyacrylate, des résines de polyméthacrylate, des résines de poly(méth)acrylate mélangées, des résines de polyesteracrylate, des résines époxydes, des résines de phénol-formaldéhyde, des résines de poly(amide-imide) et/ou des résines alkyde en tant que liant, et des résines aminoplastes, des polyisocyanates monomères et/ou polymères et/ou des hydroxyalkylamides en tant qu'agent de réticulation.

**13.** Utilisation selon l'une quelconque des revendications 1 à 11, **caractérisée en ce que** les copolymères polysiloxane-polyoxazoline sont utilisés dans des masses de moulage qui contiennent des résines de polyester, des résines vinyliques, des résines polyuréthanes, des résines polyamides, des résines de phénol-formaldéhyde et/ou des résines époxydes respectivement insaturées.

**14.** Utilisation selon la revendication 13, **caractérisée en ce que** les masses de moulage contiennent des résines de polyester et/ou des résines vinyliques respectivement insaturées qui peuvent être combinées en outre avec polystyrène, polyacétate de vinyle, polyméthacrylate de méthyle et/ou des copolymères styrène-butadiène.

**15.** Compositions de revêtement et masses de moulage thermodurcissables contenant des copolymères polysiloxane-polyoxazoline.

**16.** Revêtements sur un substrat et pièces moulées, respectivement fabriqués avec une composition de revêtement ou une masse de moulage selon la revendication 15.

Abbildung 1: Blocktester

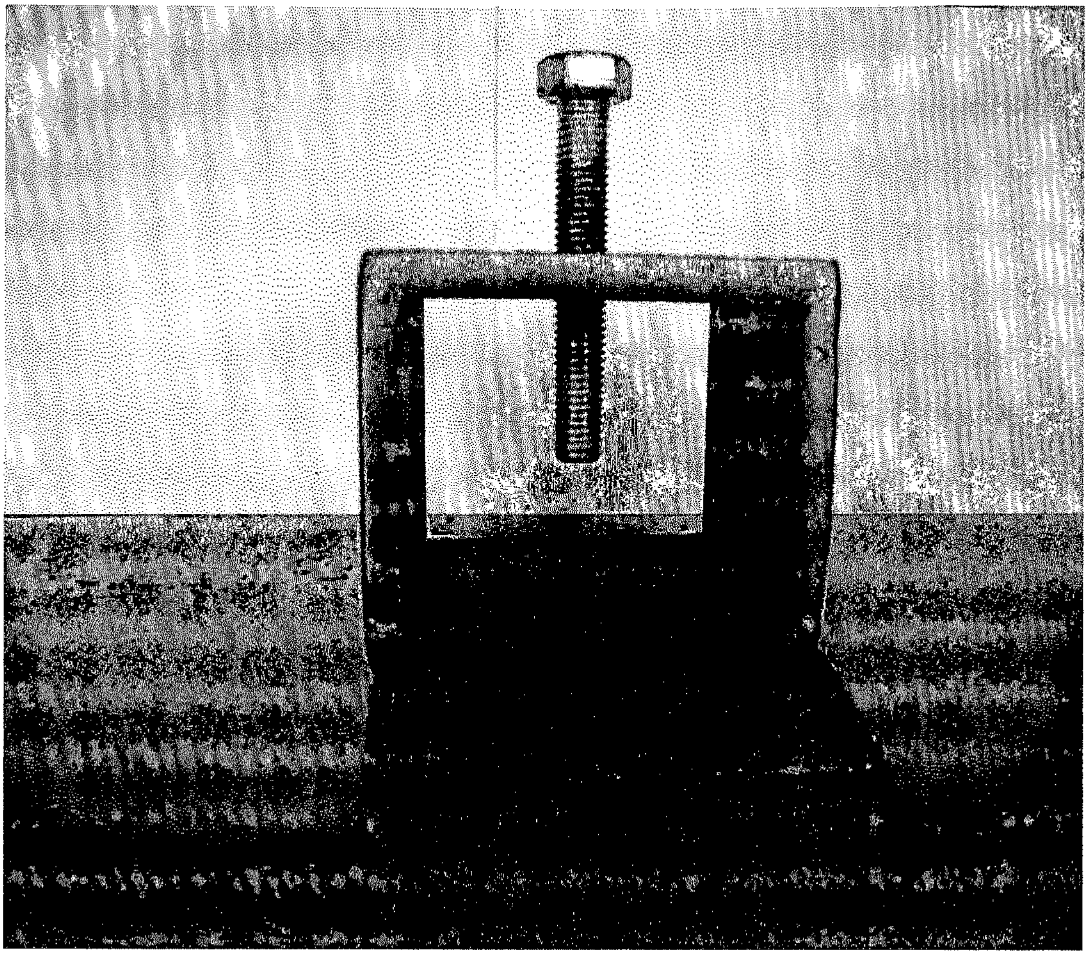

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0175092 B1
- EP 0217364 B1
- US 7504469 B
- EP 0756859 A1
- EP 0640643 A2
- US 4659777 A
- DE 19930665 A1


### In der Beschreibung aufgeführte Nicht-Patentliteratur


- **STEVEN J. HINDER et al.** Migration and segregation Phenomena of a silicone additive in a multilayer coating. *Progress in Organic Coatings,* 2005, vol. 54, 104-112
- **YOSHIKI CHUJO et al.** Synthesis of polysiloxane-polyoxazoline graft copolymer by hydrosilylation reaction. *Polymer Bulletin,* 1988, vol. 19, 435-440
- **CHUJO, YOSHIKI ; IHARA, EIJI ; SAEGUSA, TAKEO.** Synthesis of polyoxazoline - polysiloxane block copolymers. *Japan in Kobunshi Ronbunshu,* 1992, vol. 49 (11), 943-6
- **E. KARSTEN ; O.LÜCKERT.** *Lackrohstoff-Tabellen,* ISBN 3878705611
- **O. LÜCKERT.** *Pigment- und Füllstoff-Tabellen,* 2002, ISBN 9783878707448
- Polyacrylat-, Polymethacrylat- und gemischte Poly(meth)acrylat-), Polyesteracrylat-, Epoxid-, Phenol/Formaldehyd-, Poly(amid-imid). Alkydharze. Ergänzend sei hierbei auf Römpp-Lexikon Lacke und Druckfarben. Georg Thieme Verlag, 1998, 73-74
- Römpp-Lexikon Lacke und Druckfarben. Georg Thieme Verlag, 1998, 250-252, 451-453